# EUROPEAN PATENT APPLICATION

(11) **EP 2 950 592 A1**
(43) Date of publication of application: **02.12.2015**
(21) Application number: 13872411.7
(22) Date of filing: 23.01.2013
(51) Int. Cl.: H04W 52/02, H04W 92/20

(54) **MOBILE COMMUNICATION SYSTEM, WIRELESS BASE STATION DEVICE, AND OPERATION CONTROL METHOD**

(71) Applicant: Fujitsu Limited, Kawasaki-shi, Kanagawa 211-8588 (JP)
(72) Inventor: MURAKAMI Norio, Kawasaki-shi Kanagawa 211-8588 (JP); NAKATSUJI Mitsuru, Kawasaki-shi Kanagawa 211-8588 (JP)
(74) Representative: Ward, James Norman
(86) International application number: PCT/JP2013/051281
(87) International publication number: WO 2014/115261

(57) **Abstract**

A mobile communication system including: a first and second radio base stations apparatuses; and a terminal apparatus, wherein radio communication is performed between the first and second base station apparatuses and the terminal apparatus, and the first radio base station apparatus includes: a first control unit configured to control whether or not operation of the first radio base station apparatus is caused to be dormant based on a message exchanged between the second radio base station apparatus adjacent to the first radio base station apparatus and the first radio base station apparatus.

## Description

### TECHNICAL FIELD

The embodiments discussed herein are related to a mobile communication system, a radio base station apparatus, and a operation control method.

### BACKGROUND ART

Presently, a radio communication system such as a cellular telecommunication system or a wireless local area network (LAN) is widely used. Moreover, in the radio communication field, next-generation communication techniques are being discussed continuously in order to further improve communication speed and communication capacity.

For example, 3GPP (3rd Generation Partnership Project) which is a standardization organization is completed or is studying standardization of a communication standard called Long Term Evolution (LTE) and a communication standard called LTE-Advanced (LTE-A) that is based on LTE.

Moreover, 3GPP discusses energy saving (ES) in a study model (a model having a service area in which a macro base station and a pico base station overlap) of a mobile communication system.

However, for example, if a certain base station is dormant to realize ES and transmission power of a radio signal in an adjacent base station adjacent to the dormant base station changes, the radio signal transmitted from the adjacent base station may interfere. Due to such an interference problem, it was practically difficult to realize effective ES in a mobile communication system.

On the other hand, a network called heterogeneous network (HetNet) is gathering attraction in a mobile communication system. HetNet is a network in which cells having various sizes such as a macro cell, a pico cell, and a micro cell are layered, for example. HetNet includes cells which use different communication schemes (LTE and 3G) and cells which use different frequencies, for example. Since cells are layered in the HetNet in this manner, it is possible to improve the entire capacity of a mobile communication system, for example.

The following techniques are known as a technique of controlling ES or operations of base stations, for example.

According to a technique, access points are grouped, and a server stops an access point which incurs a small amount of communication traffic with subordinate terminals and increases the radio output of a specific access point so as to cover the area of the stopped access point. According to this technique, it is possible to realize power-saving of a wireless LAN system, for example.

According to another technique, a switching system searches a radio base station control pattern table based on a system operation state and transmits an instruction on an operation pattern to respective radio base stations. According to this technique, it is possible to reduce a call loss occurring due to concentration of traffics and a failure of a radio base station, for example.

Moreover, the following techniques are known as a technique of controlling transmission power, for example.

According to a technique, a total transmission power state of a subject base station is determined based on a total transmission power of a neighboring base station, and a transmission power of a common control channel of the subject base station is determined based on a service area state and a total transmission power state. According to this technique, it is possible to set the transmission power of the common control channel autonomously in cooperation with the neighboring base station, for example.

According to another technique, a service area state is determined based on a measurement result of a reception quality of a common control channel, the service area state of an adjacent base station is acquired, and the transmission power of the common control channel is controlled based on the service area states of the subject base station and the adjacent base station. According to this technique, it is possible to decrease a downlink interference amount in the entire service area and to increase a downlink capacity, for example.

### CITATION LIST

### NON-PATENT LITERATURE

Non-Patent Literature 1: 3GPP TR 36.902 V9.3.1 (2011-3)

### PATENT LITERATURE

Patent Literature 1: Japanese Laid-open Patent Publication No. 2011-15211
Patent Literature 2: Japanese Laid-open Patent Publication No. H8-289366
Patent Literature 3: Japanese Laid-open Patent Publication No. 2006-135673
Patent Literature 4: Japanese Laid-open Patent Publication No. 2007-306407

### SUMMARY OF INVENTION

### PROBLEMS TO BE SOLVED BY THE INVENTION

However, the two technique of controlling ES or operations of base stations are techniques of performing centralized management and control by the server or the switching system, for example.

When centralized management or centralized control is performed by a certain specific apparatus, a specific apparatus is additionally installed in a mobile communication system, and thus, an additional cost (or investment) for installing the same may incur. Moreover, if such a specific apparatus becomes unusable due to a failure or the like, it is not possible to stop an access point, for example. Thus, it is not possible to realize the ES of the entire mobile communication system.

Moreover, the two technique of controlling ES or operations of base stations may increase the transmission power of a specific access point or base station due to stop or the like of an access point, for example. Thus, the interference problem occurs in these techniques.

On the other hand, although the two technique of controlling transmission power can control the transmission power of a common control channel, for example, the base station itself continues operating. The power consumption due to operation of a base station is practically considerably large. Thus, the power consumption reduction effect of the control of the transmission power of a common control channel is relatively lower than an overall power consumption reduction effect of the operation of the base station.

Moreover, the two techniques of controlling transmission power do not discuss the interference problem.

Accordingly, it is an object in one aspect of the invention to provide a mobile communication system, a radio base station apparatus, and an operation control method capable of enabling base stations to control operations autonomously in cooperation.

It is an object in one aspect of the invention is to provide a mobile communication system, a radio base station apparatus, and an operation control method capable of reducing overall power consumption of a mobile communication system.

And, it is an object in one aspect of the invention to provide a mobile communication system, a radio base station apparatus, and an operation control method capable of eliminating an interference problem.

### MEANS FOR SOLVING THE PROBLEMS

According to an aspect of the embodiments, a mobile communication system including: a first and second radio base stations apparatuses; and a terminal apparatus, wherein radio communication is performed between the first and second base station apparatuses and the terminal apparatus, and the first radio base station apparatus includes: a first control unit configured to control whether or not operation of the first radio base station apparatus is caused to be dormant based on a message exchanged between the second radio base station apparatus adjacent to the first radio base station apparatus and the first radio base station apparatus.

### ADVANTAGEOUS EFFECTS OF THE INVENTION

Therefore, it is possible to provide a mobile communication system, a radio base station apparatus, and an operation control method capable of enabling base stations to control operations autonomously in cooperation. Moreover, it is possible to provide a mobile communication system, a radio base station apparatus, and an operation control method capable of reducing overall power consumption of a mobile communication system. Further, it is possible to provide a mobile communication system, a radio base station apparatus, and an operation control method capable of eliminating an interference problem.

### BRIEF DESCRIPTION OF DRAWINGS

FIG. 1 illustrates a configuration example of a mobile communication system.
FIG. 2 illustrates a configuration example of a mobile communication system.
FIG. 3 illustrates an example of a simple model of cells.
FIG. 4 is a flowchart illustrating an operation example according to a guard timing scheme.
FIG. 5 is a flowchart illustrating an operation example according to an ACK/NAK scheme.
FIG. 6 illustrates an example of an operation sequence according to the guard timing scheme.
FIG. 7 illustrates an example of an operation sequence according to the guard timing scheme.
FIG. 8 illustrates an example of an operation sequence according to the ACK/NAK scheme.
FIG. 9 illustrates an example of an operation sequence according to the ACK/NAK scheme.
FIG. 10 illustrates an example of a dormant condition determination algorithm.
FIG. 11 illustrates an example of a simple model of cells.
FIG. 12 illustrates an example of an operation sequence of reactivation.
FIG. 13 illustrates an example of state transition in a base station.
FIGS. 14A to 14C illustrate examples of messages in an X2 interface.
FIG. 15 illustrates a hardware configuration example of a base station.
FIG. 16 illustrates a configuration example of functional blocks of a base station.
FIG. 17 illustrates a configuration example of cells provided inside a space.
FIG. 18 is a flowchart illustrating an operation example of a guard timing scheme when installing in a closed/open space.
FIG. 19 illustrates a configuration example of cells in a HetNet.
FIG. 20 illustrates an operation state matrix.
FIG. 21 illustrates an example of an operation sequence in a HetNet.
FIG. 22 illustrates an example of an operation sequence in the HetNet.
FIG. 23 illustrates an example of a state transition of a cell.
FIG. 24 illustrates an example of an operation sequence in the HetNet.
FIG. 25 illustrates an example of an operation sequence in the HetNet.
FIG. 26 illustrates an example of an operation sequence in the HetNet.

### DESCRIPTION OF EMBODIMENTS

Hereinafter, embodiments of the present invention will be described in detail with reference to the drawings.

### [First Embodiment]

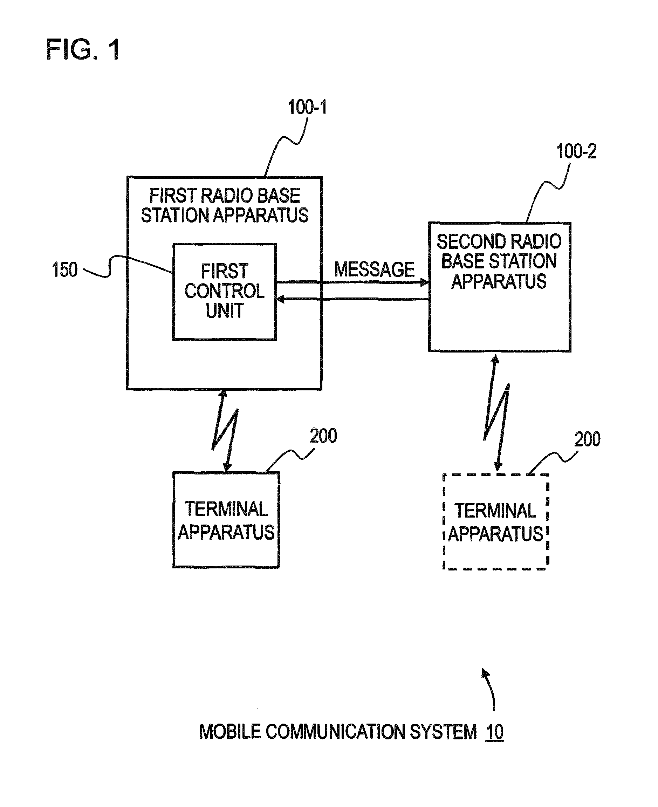

A first embodiment will be described. FIG. 1 illustrates a configuration example of a mobile communication system 10 according to the first embodiment. The mobile communication system 10 includes first and second radio base station apparatuses 100-1 and 100-2 and a terminal apparatus 200.

The first radio base station apparatus 100-1 can perform radio communication with the terminal apparatus 200 in a service coverage (sometimes referred to as a cell range, for example) of the subject base station and provide various services such as voice communication, video distribution, or browsing to the terminal apparatus 200.

Moreover, the second radio base station apparatus 100-2 also can perform radio communication with the terminal apparatus 200 in the cell range of the subject base station and provide various services to the terminal apparatus 200.

The first radio base station apparatus 100-1 includes a first control unit 150. The first control unit 150 exchanges a message with the second radio base station apparatus 100-2 adjacent to the first radio base station apparatus 100-1 and controls whether the first radio base station apparatus 100-1 which is the subject base station is to be dormant based on the exchanged message.

For example, the control is performed in the following manner. That is, the first control unit 150 determines whether the first radio base station apparatus 100-1 satisfies a dormant condition based on the state of communication with the terminal apparatus 200 that is performing radio communication with the first radio base station apparatus 100-1.

The dormant condition is a condition for determining whether the radio base station apparatus is in a dormancy possible state, for example. A condition that "an amount of traffic in one cell decreases and changes within a predetermined threshold for a predetermined period" can be used as the dormant condition, for example.

When it is determined that the dormant condition is satisfied, the first control unit 150 transmits a first dormancy declaration message to the second radio base station apparatus 100-2 unless a second dormancy declaration message is received from the second radio base station apparatus 100-2. In this case, the first dormancy declaration message is a message indicating that the first radio base station apparatus 100-1 is in a dormancy possible state, for example. Moreover, the second dormancy declaration message is a message indicating that the second radio base station apparatus 100-2 is in a dormancy possible state, for example.

After that, the first control unit 150 enters the dormant mode unless the second dormancy declaration message is received within a guard timing period (or a predetermined period) after it is determined that the second dormancy declaration message does not be received from the second radio base station apparatus 100-2.

Upon entering the dormant mode, the first radio base station apparatus 100-1 allows a processing block (for example, the first control unit 150) for exchanging messages with the second radio base station apparatus 100-2 to continue operating but the operations of the other processing blocks are dormant.

On the other hand, even when the dormant condition is satisfied, when the second dormancy declaration message already is received from the second radio base station apparatus 100-2 or the second dormancy declaration message is received within the guard timing period, the first control unit 150 allows the first radio base station apparatus 100-1 to continue operating.

As described above, in the mobile communication system 10, the first and second radio base station apparatuses 100-1 and 100-2 do not transmit messages to an upper apparatus or the like, but it is controlled whether the operation of the subject base station is to be dormant by allowing the radio base station apparatuses to exchange messages with each other.

Thus, in this mobile communication system 10, for example, the first and second radio base station apparatuses 100-1 and 100-2 cooperate with each other to control an operation of allowing the first radio base station apparatus 100-1 itself to autonomously determine whether the operation thereof is to be dormant.

Moreover, in this mobile communication system 10, for example, by exchanging messages, the operation of the first radio base station apparatus 100-1 can be dormant. Thus, when the operation of the first radio base station apparatus 100-1 is dormant, it is possible to reduce the overall power consumption of the mobile communication system 10 dramatically as compared to when the operation of the first radio base station apparatus 100-1 is continued and when the transmission power of a common control channel transmitted from the first radio base station apparatus 100-1 is controlled.

Further, in this mobile communication system 10, when the operation of the first radio base station apparatus 100-1 is dormant, control of increasing the transmission power of the second radio base station apparatus 100-2 is not performed. Thus, in this mobile communication system 10, even when the operation of the first radio base station apparatus 100-1 is dormant, it is possible to obviate the interference problem.

### [Second Embodiment]

Next, a second embodiment will be described. The second embodiment will be described in the following order.
<1. Configuration example of mobile communication system>
<2. Operation example>
<3. Configuration example of base station>
<4. Example 1>
<5. Example 2>

### <1. Configuration example of mobile communication system>

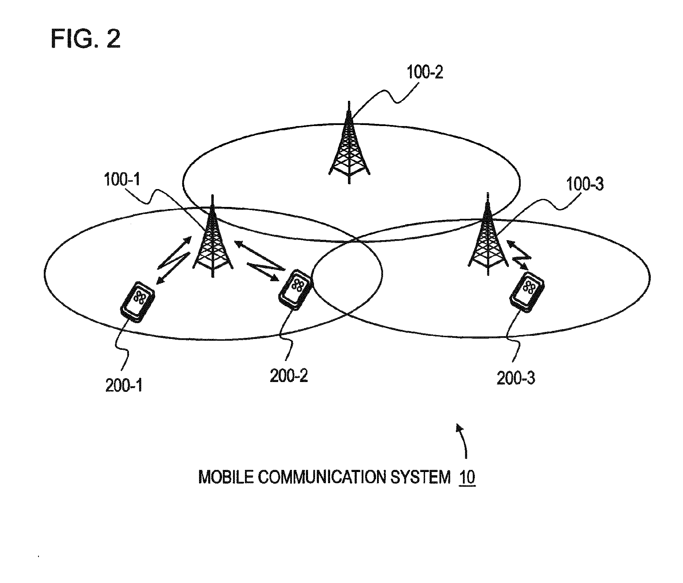

First, a configuration example of a mobile communication system according to the second embodiment will be described. FIG. 2 illustrates a configuration example of a mobile communication system 10.

The mobile communication system 10 includes radio base station apparatuses (hereinafter sometimes referred to as "base station") 100-1 to 100-3 and terminal apparatuses (hereinafter sometimes referred to as "terminal") 200-1 to 200-3.

The respective base stations 100-1 to 100-3 are radio communication apparatuses that establish radio connection with the terminals 200-1 to 200-3 to perform radio communication. Moreover, the base stations 100-1 to 100-3 can provide various services such as voice communication or video distribution to the terminals 200-1 to 200-3 in one or a plurality of cell ranges (or service areas or communication ranges).

In FIG. 2, the circles around the respective base stations 100-1 to 100-3 indicate the cell ranges of the respective base stations 100-1 to 100-3. In the following description, such a cell range is sometimes referred to as a "cell". Moreover, a cell range and a base station having the cell range may sometimes be referred to collectively as a "cell".

The terminals 200-1 to 200-3 are radio communication apparatuses that establish radio connection with the base stations 100-1 to 100-3 to perform radio communication. The terminals 200-1 to 200-3 are feature phones, smartphones, or personal computers, for example.

The example of FIG. 2 illustrates a state in which two terminals 200-1 and 200-2 connect to the base station 100-1 to perform radio communication and the terminal 200-3 connects to the base station 100-3 to perform radio communication. The configuration of the mobile communication system 10 illustrated in FIG. 2 is an example only, and the mobile communication system 10 may include two base stations or four or more base stations. Moreover, the mobile communication system 10 may include four or more terminals.

The base stations 100-1 to 100-3 may sometimes be referred to collectively as the base station 100 unless otherwise stated. Moreover, the terminals 200-1 to 200-3 may also sometimes be referred to as the terminal 200 unless otherwise stated.

### <2. Operation example>

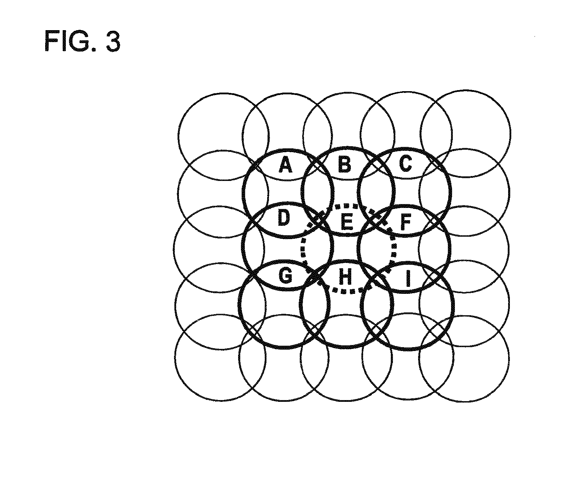

Hereinafter, an operation example of the mobile communication system 10 will be described. First, an operation example of the mobile communication system 10 will be described briefly using a simple model illustrated in FIG. 3.

FIG. 3 illustrates a configuration example of cells. A cell E (depicted by dot lines) is disposed at the center, and adjacent cells A to D and F to I (depicted by bold lines) adjacent to the cell E are disposed so as to overlap a cell range of the cell E.

It is assumed that the cell E satisfies the dormant condition. Here, the dormant condition is that "an amount of traffic in one cell decreases and changes within a predetermined threshold for a predetermined period," for example. When the cell E satisfies the dormant condition, the cell E transmits a dormancy declaration message to the adjacent cells A to D and F to I. For example, the cell E transmits a declaration of dormancy by transmitting a dormancy declaration message. After transmitting the dormancy declaration message, the cell E suspends the operation of the cell E when there is no decrease in the traffic of the adjacent cells A to D and F to I.

In other words, the operation of the cell E is dormant, for example, when an amount of traffic in the cell E decreases to be equal to or smaller than a threshold in a predetermined period and amounts of traffic in the adjacent cells A to D and F to I increases to be larger than the threshold in the predetermined period.

The above is a condition (hereinafter sometimes referred to as the dormant condition) for being dormant the cell E. In this case, when the cell E and an adjacent cell (one or a plurality of cells) satisfy the dormant condition simultaneously and the adjacent cell transmits the declaration of dormancy simultaneously with the cell E, "the operations of the adjacent cell as well as the cell E are not to be dormant simultaneously".

This is because, if the adjacent cells are dormant simultaneously, an out-of-service range increases, the service area is not covered by other cells, and the service quality deteriorates. When adjacent cells transmit the declaration of dormancy simultaneously in this manner, the declaration of dormancy of a certain cell is prioritized in this mobile communication system 10. For example, the declaration of dormancy of a certain cell may be prioritized according to the order of cell identification information or the like.

Moreover, when the dormancy declaration message is received from the adjacent cells A to D and F to I in a predetermined period after the cell E transmitted the dormancy declaration message, "the cell E abandons the declaration of dormancy and the declarations of dormancy of the adjacent cells A to D and F to I are regarded valid". The cell E determines that the declarations of dormancy from the adjacent cells A to D and F to I are earlier than the declaration of dormancy transmitted by the cell E itself. That is, for declarations of dormancy transmitted within a predetermined period (or within a guard timing period), the declaration of dormancy of a cell transmitted the dormancy declaration message earlier than the other cells is regarded valid based on the principle that adjacent cells are not dormant simultaneously.

Hereinabove, an operation example of the mobile communication system 10 is described briefly. Next, a basic operation performed by the base station 100 (or cells) will be described.

### <2.1 Basic operation>

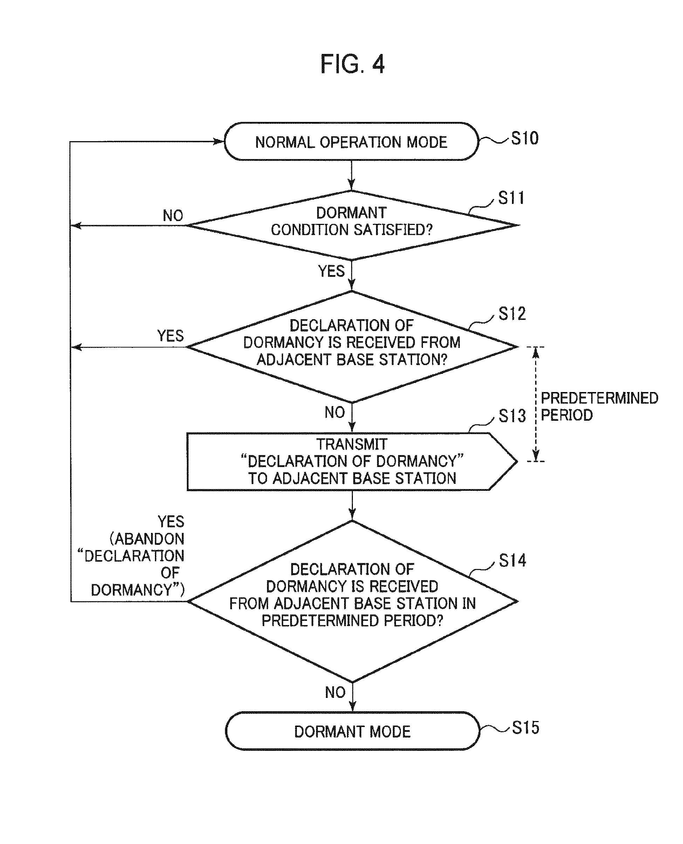

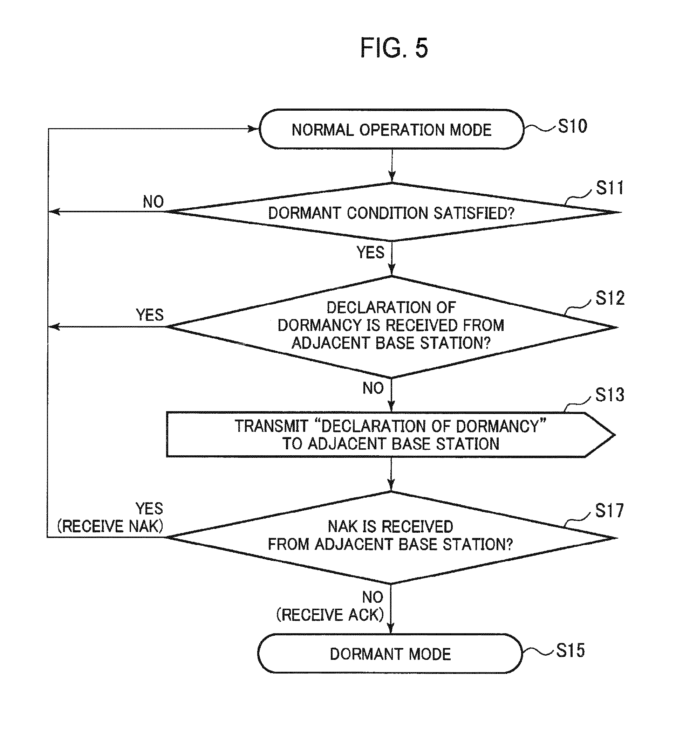

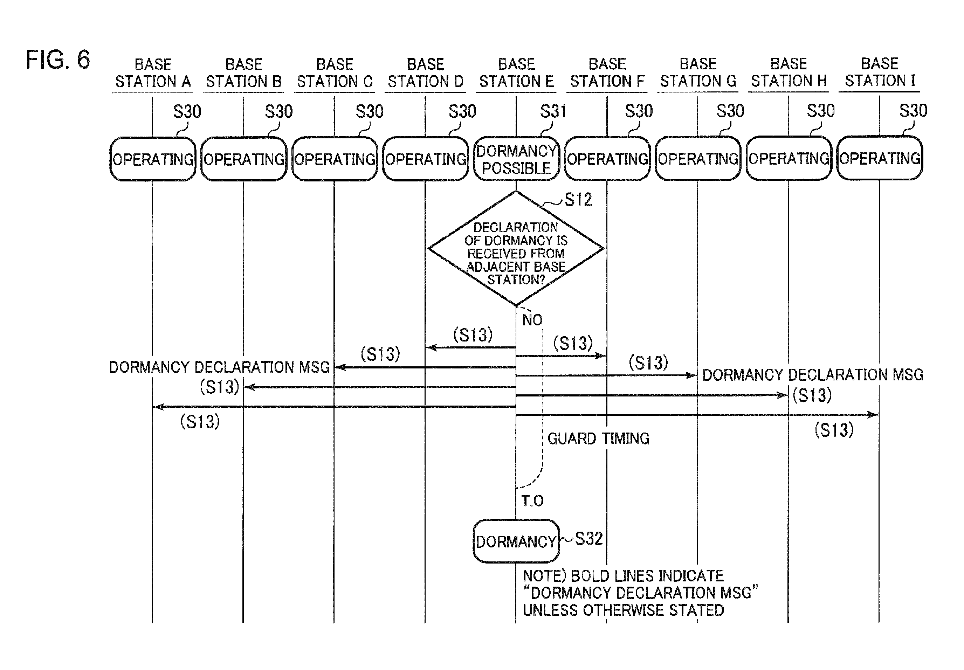

FIGS. 4 and 5 are flowcharts illustrating examples of a basic operation and FIGS. 6 to 9 illustrate sequence diagrams illustrating examples of the basic operation.

Specifically, FIG. 4 is a flowchart illustrating an operation example according to a guard timing scheme and FIG. 5 is a flowchart illustrating an operation example according to an ACK/NAK scheme. In the second embodiment, the two schemes of a guard timing scheme and an ACK/NAK scheme are used. First, the operation example illustrated in FIG. 4 will be described.

The base station 100 operates in a normal operation mode (S10). A normal operation mode is, for example, a state in which all processing blocks in the base station 100 are powered on and is a state in which the base station 100 operates in a normal state.

Subsequently, the base station 100 determines whether a dormant condition is satisfied (S11). As the dormant condition, it may be determined whether the condition "an amount of traffic in one cell decreases and changes within a predetermined threshold in a predetermined period" is satisfied.

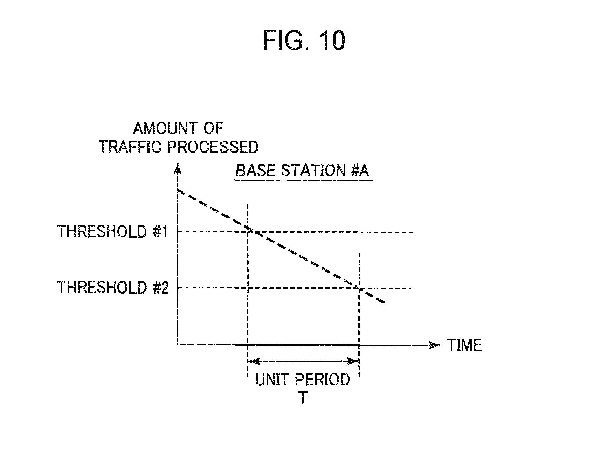

FIG. 10 illustrates an example of a dormant condition determination algorithm. FIG. 10 illustrates an example when an amount of traffic processed is focused on. That is, base station #A measures an amount of traffic processed. When it is detected that the measured amount of traffic processed changes from threshold #1 to threshold #2 (threshold #1>threshold #2) or smaller in a unit period T (or when a change in the traffic decreases to be smaller than a threshold), the base station #A determines that the condition "an amount of traffic in one cell decreases and changes within a predetermined threshold in a predetermined period" is satisfied. In this case, the base station #A transmits the dormancy declaration message to an adjacent base station. This can be determined to be a state in which, when the amount of traffic of the base station #A decreases, the number of terminals (or users) 200 present in the base station decreases and the operation of the base station #A can be dormant.

According to a general base station design method, base stations are designed so that adjacent base stations cover a service area. When the traffic of the base station #A decreases, it is expected that a decrease in traffic also occurs in an adjacent base station adjacent to the base station #A. In such a case, although the base station #A is dormant, the service area of the base station #A can be covered by the adjacent base station.

In the example of FIG. 10, although the amount of traffic processed is used as a dormant condition determination indicator, a reference signal received power (RSRP) in the terminal 200, for example, may be used as the dormant condition determination indicator. The terminal 200 present in the service area of the base station measures the RSRP of an adjacent base station (or a neighboring base station) and transmits the RSRP to the base station. The base station can determine whether the dormant condition is satisfied by determining whether a radio signal is received with a sufficient power from the adjacent base station (or the neighboring base station) based on the RSRP.

In addition to the RSRP, a carrier to noise ratio, a signal-noise ratio, a signal to interference power ratio (SIR), an energy power bit to noise power spectral density ratio (Eb/NO), and the like may be used as the dormant condition determination indicator. Alternatively, a combination of these indicators may be used as the dormant condition determination indicator.

Returning to FIG. 4, when the dormant condition is not satisfied (S11: NO), the base station 100 enters a normal operation mode (S10).

On the other hand, when the dormant condition is satisfied (S11: YES), the base station 100 determines whether the declaration of dormancy receives from an adjacent base station (S12).

When the declaration of dormancy receives from the adjacent base station (S12: YES), the base station 100 continues the normal operation mode (S10) without transmitting the dormancy declaration message to the adjacent base station. In this case, since the dormancy declaration message from the adjacent base station is earlier than the dormancy declaration message (in subsequent step S13) of the base station 100, the declaration of dormancy from the adjacent base station is regarded valid, and the base station 100 does not transmit the dormancy declaration message to the adjacent base station.

On the other hand, when the dormancy declaration message does not be received from the adjacent base station (S12: NO), the base station 100 transmits the dormancy declaration message to the adjacent base station (S13). In this case, since the amount of traffic, for example, decreased and it is confirmed in step S12 that the adjacent base station does not be dormant (S12: NO), the base station 100 transmits the dormancy declaration message to the adjacent base station.

It is assumed that the dormancy declaration message includes information indicating that the base station 100 is in the dormancy possible state. An example of the dormancy declaration message will be described later.

Subsequently, the base station 100 determines whether the dormancy declaration message is received from the adjacent base station in a guard timing period (or a predetermined period) (S14). In this case, the guard timing period is a predetermined period which starts from the start of the process of S12 (or after the process of S12), for example.

When the dormancy declaration message receives from the adjacent base station in the guard timing period (S14: YES), the base station 100 abandons the dormancy declaration message of the base station 100 and proceeds to S10.

As described above, when the dormancy declaration message is received from the adjacent base station in the guard timing period, the base station 100 determines that the declaration of dormancy of the adjacent base station is earlier than the declaration of dormancy of the subject base station, abandons the transmitted dormancy declaration message, and regards the dormancy declaration message from the adjacent base station valid. In this case, the base station 100 can notify abandonment of the declaration of dormancy declared by itself by transmitting a dormancy declaration abandon message to the adjacent base station.

On the other hand, when the declaration of dormancy does not be received from the adjacent base station in the guard timing period (S14: NO), the base station 100 enters the dormant mode (S15). In this case, the base station 100 enters the dormant mode in order to meet the principle that the base station 100 and the adjacent base station are not to be dormant simultaneously and adjacent base stations are not to be dormant simultaneously.

When the base station is in the dormant mode, a processing block that executes an X2 interface which is an interface for exchanging messages and the like between base stations is operated (powered on) and the operation of the other processing blocks is dormant (the other processing blocks are powered off), for example. Details thereof will be described later.

In the operation example described above, for example, the base station 100 determines the validity of the declaration of dormancy based on whether the declaration of dormancy receives from the adjacent base station in the guard timing period. Besides this, the validity of the declaration of dormancy may be determined based on a response from an adjacent base station to the declaration of dormancy. FIG. 5 is a flowchart illustrating an example of a basic operation when an ACK/NAK scheme is used.

The operations of steps S10 to S13 are the same as those of the guard timing scheme (FIG. 4). After transmitting the dormancy declaration message (S13), the base station 100 determines whether a negative response (negative acknowledge (NAK)) to the dormancy declaration message is received from the adjacent base station (S17).

The NAK being replied from the adjacent base station means that the declaration of dormancy of the adjacent base station is earlier than the declaration of dormancy of the base station 100 and that the adjacent base station does not accept the declaration of dormancy of the base station 100, for example.

Thus, when the base station 100 receives the NAK from the adjacent base station (S17: YES), the base station 100 continues the normal operation mode without entering the dormant mode (S10). When there is a plurality of adjacent base stations, the base station 100 continues the normal operation mode without entering the dormant mode even when the NAK is received from one adjacent base station.

On the other hand, when ACK is received from the adjacent base station (S17: NO), the base station 100 enters the dormant mode (S15). In this case, for example, the adjacent base station notifies the base station 100 of the fact that the adjacent base station accepts the declaration of dormancy of the base station 100 and the base station 100 is allowed to be dormant. In such a case, the base station 100 enters the dormant mode. When there is a plurality of adjacent base stations, the base station 100 enters the dormant mode when ACK is received from all adjacent base stations. This is to prevent the adjacent base stations from being dormant simultaneously.

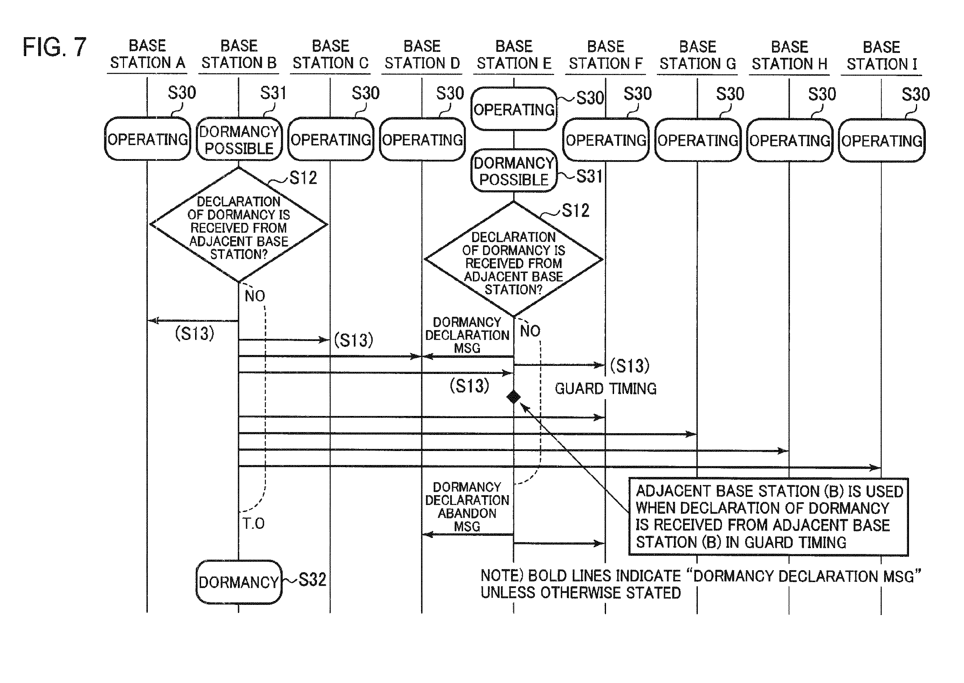

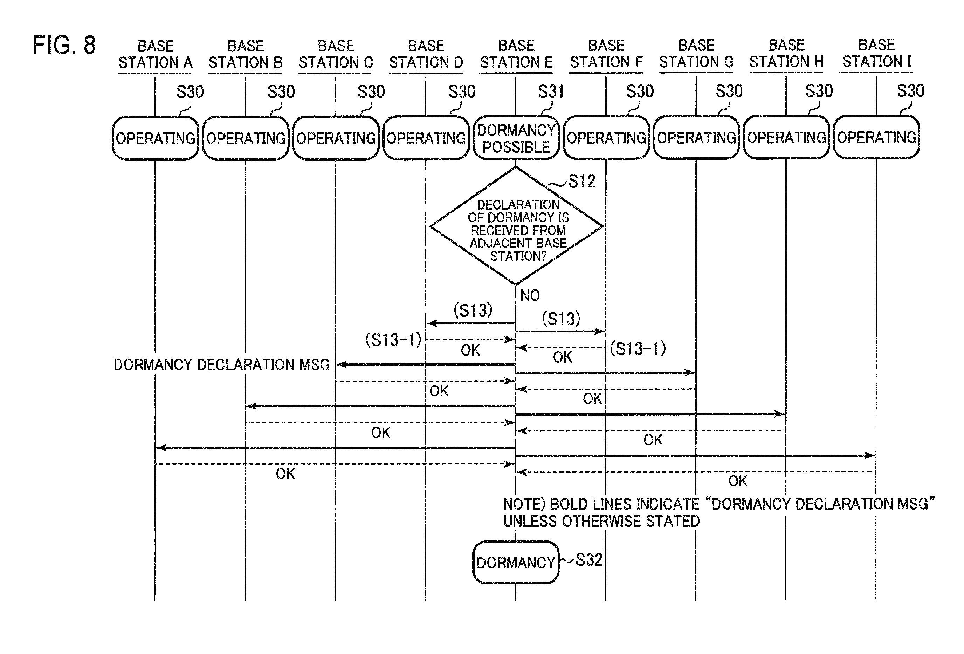

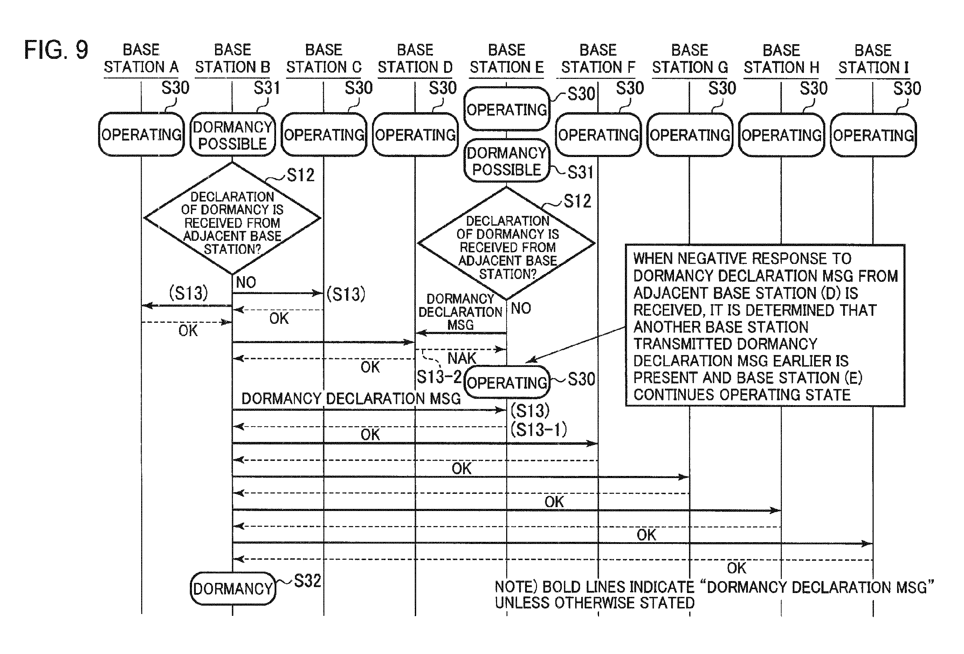

Next, an example of an operation sequence according to the guard timing scheme and the ACK/NAK scheme will be described. FIGS. 6 and 7 illustrate examples of the operation sequence according to the guard timing scheme and FIGS. 8 and 9 illustrate examples of the operation sequence according to the ACK/NAK scheme. FIGS. 6 to 9 illustrate examples of the operation sequence in the simple model of cells illustrated in FIG. 3.

In the example of FIG. 6, when the adjacent base stations A to D and F to I of the base station E are in the operating state (S30), the base station E satisfies the dormant condition (S31, S11 of FIG. 4: YES). In this case, when the base station E does not receives the declaration of dormancy from the adjacent base stations A to D and F to I (S12: NO), the base station E transmits the dormancy declaration message ("dormancy declaration MSG" in FIG. 6) (S13). Moreover, since the declaration of dormancy does not be received from the adjacent base stations A to D and F to I in the guard timing period (S14 in FIG. 4: NO), the base station E enters the dormant mode (S32, S16 of FIG. 4).

In the example of FIG. 7, although the base station E transmits the dormancy declaration message to the adjacent base stations A to D and F to I (S13), the base station E receives the dormancy declaration message transmitted from the base station B which is one of the adjacent base stations in the guard timing period. The base station E determines that the declaration of dormancy of the base station B is earlier than the declaration of dormancy of the subject base station and determines that the declaration of dormancy of the base station B is valid. Moreover, the base station E transmits the dormancy declaration abandon message ("dormancy declaration abandon MSG" in FIG. 7) to the adjacent base stations D and F which transmits the dormancy declaration message. In this case, the base station E continues the normal operation mode.

On the other hand, the base station B does not receive the declaration of dormancy from the adjacent base stations in the guard timing period and enters the dormant mode (S32).

In the example of FIG. 8, when the base station E satisfies the dormant condition (S31) and does not receives the dormancy declaration message from the adjacent base stations A to D and F to I (S12: NO), the base station E transmits the dormancy declaration message (S13). After that, the base station E receives ACK ("OK" in the drawing) from the adjacent base stations A to D and F to I. Since the base station E receives the ACK from all adjacent base stations A to D and F to I, the base station E can enter the dormant mode (S32).

On the other hand, in the example of FIG. 9, although the base station E transmits the dormancy declaration message (S13), the base station E receives NAK to the dormancy declaration message from the base station D which is one of the adjacent base stations (S13-2). In this case, the base station E determines that an adjacent base station transmitted the dormancy declaration message earlier than itself is present and continues an operating state (normal operation mode) (S30).

The base station D may receive the dormancy declaration messages from adjacent base stations simultaneously or successively, for example. However, in such a case, based on the principle that "adjacent base stations are not to be dormant simultaneously," when the dormancy declaration messages are received simultaneously, the base station D may transmit ACK to any one of the messages. When the dormancy declaration messages are received successively, the base station D may transmit ACK to the declaration of dormancy received first and transmit NAK to the dormancy declaration messages received later than the first dormancy declaration message.

In the guard timing scheme as well as the ACK/NAK scheme, when a plurality of base stations disposed in a certain area transmits the dormancy declaration messages simultaneously, accepting all of the transmitted declarations of dormancy may result in interruption of communication in that area. Thus, the declaration of dormancy of a certain base station is able to be accepted and the declaration of dormancy of the other base stations is not able to be accepted (or rejected or excluded) to an extent that a communication service can maintained in that area.

In order to realize such a process, the plurality of received dormancy declaration messages may be processed by processing the messages preferentially or non-preferentially based on an indicator such as identification information of the base station transmitted the declaration of dormancy in the dormancy declaration message or a designated priority allocated to a specific base station, for example.

In the example of FIG. 9, although the base station E receives the dormancy declaration message from the base station B and the dormancy declaration message from the base station E, since the base station E is configured to transmit NAK to the dormancy declaration message from the base station E, the base station E transmits NAK to the base station E. Naturally, the base station D may transmit ACK to the dormancy declaration message from the base station B and transmit NAK to the dormancy declaration message from the base station E, received later.

Since the base station B transmits the dormancy declaration message (S13) and receives ACK from all adjacent base stations A and C to I, the base station B enters the dormant mode (S32).

When the base station B enters the dormant mode, the base station B may allow the subordinate terminal 200 to perform a handover forcibly in order to service the calls for the subordinate terminal 200. For example, the base station B may notify the subordinate terminal 200 of the entering into the dormant mode, the terminal 200 may select and notify an adjacent base station providing the best communication quality, and the base station B may transmit a notification message to the notified adjacent base station to inform that the notified adjacent base station is a handover destination of the terminal 200. Alternatively, the base station B may transmit a handover message or the like to specify any one of adjacent base stations in the operating state as a handover destination to the subordinate terminal 200 to inform the subordinate terminal 200 of the handover destination and to allow the terminal 200 to perform a handover forcibly.

### <2.2 Reactivation>

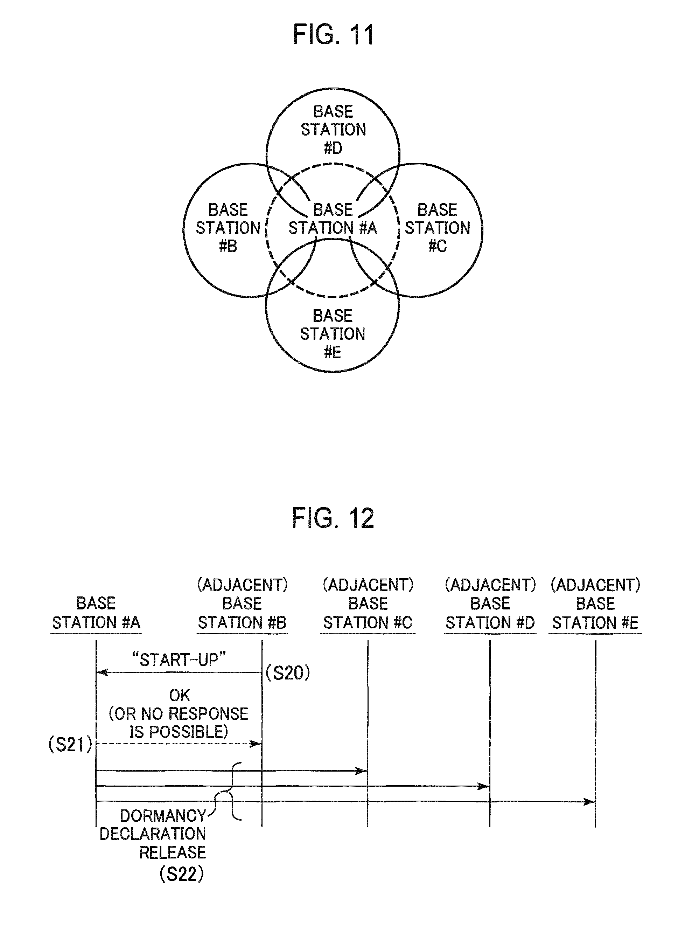

Next, an operation example when the base station 100 in the dormant state is reactivated will be described. FIG. 11 illustrates an example of a simple model for describing reactivation and FIG. 12 illustrates an example of an operation sequence of reactivation.

In the example of FIG. 11, the base station #A is in the dormant state (or in the dormant mode), and the adjacent base stations #B to #E adjacent to the base station #A are in the operating state (or in the normal operation mode). In this case, since the base station #A is in the dormant state, it is expected that the amounts of traffic of the adjacent base stations #B to #E also decrease.

In such a case, for example, when the amount of traffic in the adjacent base station #B changes by a threshold or more in a unit period, the adjacent base station #B transmits an activation message to the base station #A (S20 of FIG. 12). If the amount of traffic in the adjacent base station #B increases, it is expected that the amount of traffic in the base station #A in the dormant state may also increase. Thus, the adjacent base station #B transmits the activation message so that the base station #A in the dormant state is activated.

Upon receiving the activation message, the base station #A in the dormant state may transmit ACK (positive response, "OK" in the drawing) to the base station #B transmitted the activation message (S21).

Upon receiving the activation message, the base station #A transmits a dormancy declaration release message to the adjacent base stations #C to #E (S22). In this way, for example, the base station #A can release the declaration of dormancy transmitted to the adjacent base stations #B to #E.

After transmitting the dormancy declaration release message, the base station #A transitions from the dormant mode to the normal operation mode (or an operation mode). Moreover, by receiving the dormancy declaration release message, the adjacent base stations #B to #E confirms that the base station #A having being dormant start-ups the operating.

As a reactivation condition for reactivating the base station #A in the dormant state, an algorithm opposite to the dormant condition, for example, can be used. For example, with a focus on the amount of traffic processed, when the amount of traffic processed changes from threshold #3 to threshold #4 or more (threshold #4>threshold #3) in a unit period, the base station #B determines that the reactivation condition is satisfied and transmits an activation message to the base station #A.

On the other hand, when the amount of traffic processed does not change from threshold #3 to threshold #4 or more, it is possible for the base station #B to determine that the reactivation condition is not satisfied and not to transmit an activation message to the base station #A.

The above is an example of the basic operation of reactivation of the base station #A. Although the above example focuses on the "amount of traffic," similarly to the dormant condition determination algorithm (for example, FIG. 10), various indicators (RSRP, SIR, and the like) indicating a signal reception state of the terminal 200 or a combination thereof may be used in addition to the amount of traffic.

When the base station #A in the dormant state is reactivated, the corresponding call in the cell range of the base station #A may be forcibly handed over to the base station #A.

For example, when the adjacent base station #B determines that the terminal 200 is positioned within the cell range of the base station #A based on the reception quality transmitted from the terminal 200, the adjacent base station #B may transmit a message to the terminal 200 so as to perform a handover to the base station #A forcibly to allow the terminal 200 to perform a handover.

### <2.3 State transition of base station>

As described above, in the second embodiment, the dormant mode is newly defined for the base station 100. The dormant mode is a state in which a processing block that executes the X2 interface in the 3GPP specification is in an operating state and the operations of the other processing blocks are dormant, for example. The X2 interface is operated in the dormant mode so that an activation message can be received from an adjacent base station, for example. In the dormant mode, the operation of the base station 100 is dormant except for the operation of receiving an activation message transmitted from an adjacent base station, for example.

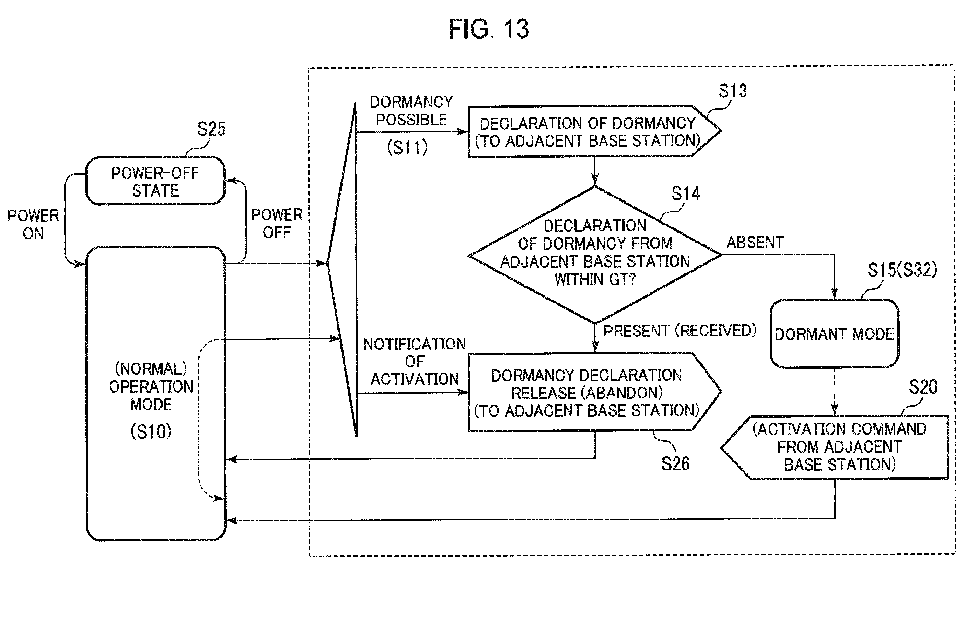

FIG. 13 illustrates an example of a state transition of the base station 100. When the base station 100 is powered on in a power-off state (S25), the base station 100 enters a normal operation mode (normal operation mode in S10). Moreover, when the base station 100 is powered off in the normal operation mode (S10), the base station 100 enters the power-off state (S25).

Moreover, when the dormant condition (S11) is satisfied in the normal operation mode (S10), the base station 100 transmits the dormancy declaration message to an adjacent base station (S13). The base station 100 enters the dormant mode (S15 and S32) when the dormancy declaration message does not be received from the adjacent base station in a guard timing period (S14: "Absent").

Upon receiving an activation command ("Activation," an activation message or the like) from the adjacent base station (S20), the base station 100 entered the dormant mode (S15 and S32) enters the normal operation mode (S10).

On the other hand, upon receiving the dormancy declaration message from the adjacent base station in the guard timing period (S14: "Present"), the base station 100 transmits a dormancy declaration abandon message to the adjacent base station (S26) and enters the normal operation mode (S10).

### <2.4 Examples of message>

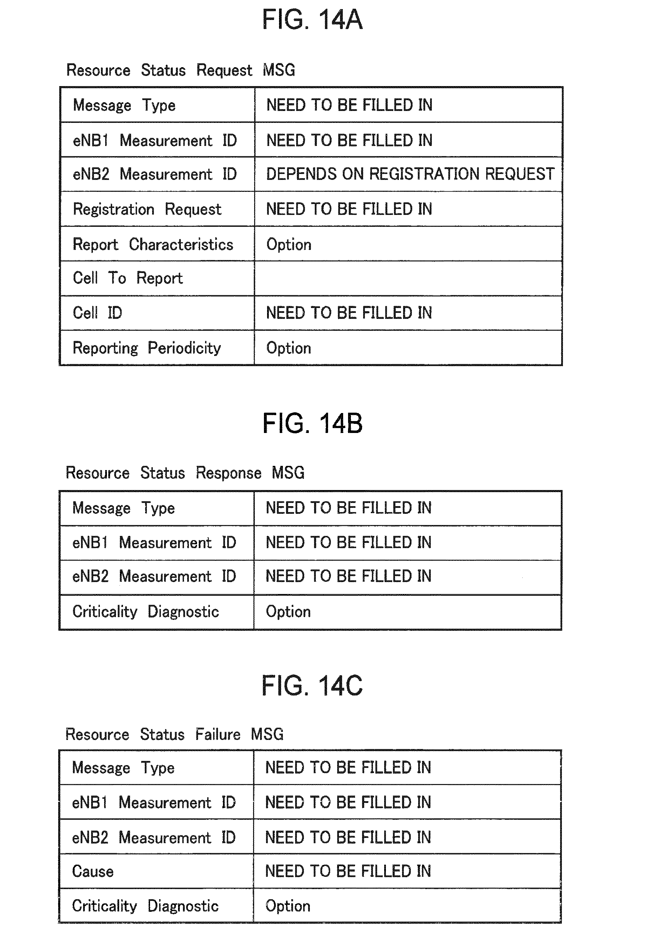

Next, examples of respective messages such as "declaration of dormancy," "dormancy declaration release (abandon)", "activation", and "ACK" and "NAK" to "declaration of dormancy" exchanged between the base stations 100 will be described. FIGS. 14A to 14C illustrate the configuration examples of such messages.

In the X2 interface, messages "Resource Status Request MSG," "Resouce Status Response MSG," and "Resource Status Failure MSG" are defined.

The "Resource Status Request MSG" illustrated in FIG. 14A illustrates a message that requests transmission of a resource status. A "Request Characteristics" area is present in the message as an optional item, and the respective message "declaration of dormancy", "dormancy declaration release (abandon)", and "activation" can be created using the two bits inserted in this area.

The "Resource Status Response MSG" illustrated in FIG. 14B is a response message to "Resource Status Request MSG," for example. The "ACK" message can be created using a "Criticality Diagnostic" area which is an optional item of this message.

Moreover, the "Resource Status Failure MSG" illustrated in FIG. 14C is a message indicating a failure in acquisition of a resource status in response to the "Resource Status Request MSG," for example. The "NAK" message can be created using a "Criticality Diagnostic" area which is an optional item of this message.

### <3. Configuration example of base station>

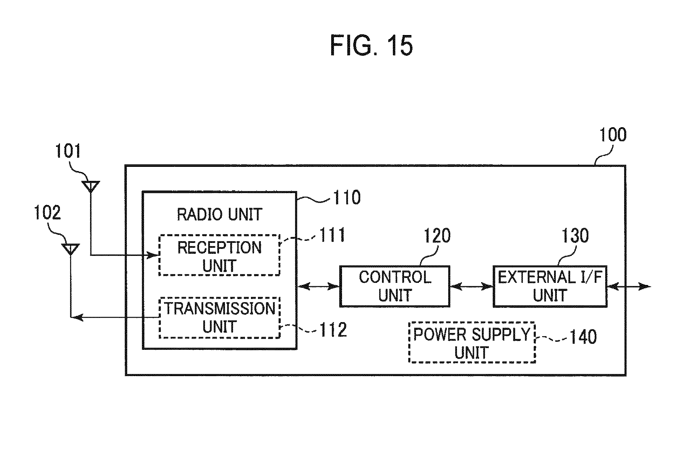

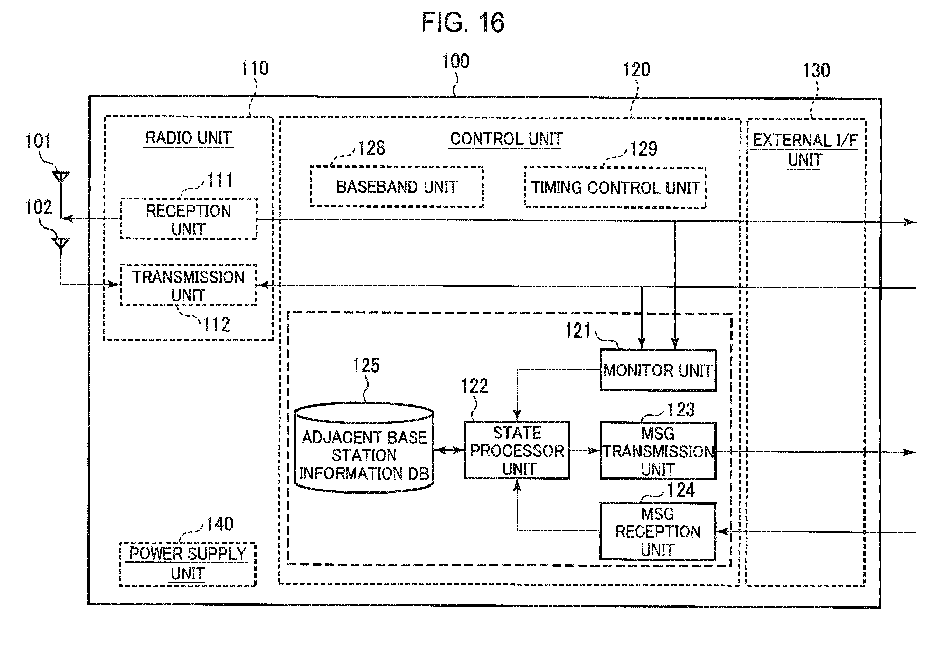

Next, a configuration example of the base station 100 will be described. FIG. 15 illustrates a hardware configuration example of the base station 100 and FIG. 16 illustrates a configuration example of a functional block of the base station 100.

As illustrated in FIG. 15, the base station 100 includes a reception antenna 101, a transmission antenna 102, a radio unit 110, a control unit 120, an external I/F unit 130, and a power supply unit 140. Moreover, as illustrated in FIG. 16, the radio unit 110 includes a reception unit 111 and a transmission unit 112. Further, the control unit 120 includes a monitor unit 121, a state processor unit 122, a MSG transmission unit 123, a MSG reception unit 124, an adjacent base station information database (DB) 125, a baseband unit 128, and a timing control unit 129.

The first control unit 150 of the first embodiment corresponds to the control unit 120, for example.

The reception antenna 101 receives a radio signal transmitted from the terminal 200.

The reception unit 111 converts the radio signal received from the reception antenna 101 from a radio-band signal to a baseband signal. The reception unit 111 may include a duplexer, a power amplifier, a high-frequency amplifier or a low-noise amplifier, an orthogonal modulation/demodulation circuit, and the like so that a radio signal is received and frequency conversion or the like is performed.

The transmission unit 112 converts a baseband signal output from the control unit 120 from a baseband signal to a radio-band signal. The transmission unit 112 may include a duplexer, a power amplifier, a low-noise amplifier, an orthogonal modulation/demodulation circuit, and the like so that frequency conversion, radio signal transmission, and the like are performed.

The transmission antenna 102 transmits the radio signal output from the transmission unit 112 to the terminal 200.

The monitor unit 121 monitors or observes the amount (hereinafter sometimes referred to as traffic) of data packets transmitted and received in the base station 100. The monitor unit 121 outputs the observed traffic to the state processor unit 122.

The monitor unit 121 may observe the traffic based on the number of resource blocks (or the amount of radio resources) allocated to the subordinate terminal 200 by a scheduler. The scheduler is disposed in the control unit 120, for example, and although not depicted in FIG. 16, the monitor unit 121, the timing control unit 129, or the like, for example, may be the scheduler.

The state processor unit 122 receives the traffic from the monitor unit 121 and determines whether the dormant condition is satisfied. For example, the state processor unit 122 makes the determination according to the dormant condition determination algorithm illustrated in FIG. 10.

Moreover, when it is determined that the dormant condition is satisfied and the dormancy declaration message does not be received from an adjacent base station, the state processor unit 122 requests the MSG transmission unit 123 to transmit the "dormancy declaration message" (for example, FIG. 14A).

Further, the state processor unit 122 determines whether the "dormancy declaration message" is received from the adjacent base station in the guard timing period and determines whether the base station 100 can enter the dormant mode. When the "dormancy declaration message" does not be received from the adjacent base station in the guard timing period, the state processor unit 122 requests the power supply unit 140 to allow the base station 100 to enter the dormant mode.

On the other hand, when the "dormancy declaration message" is received from the adjacent base station in the guard timing period, the state processor unit 122 requests the MSG transmission unit 123 to transmit the "dormancy declaration abandon message" so that the "dormancy declaration message" which is transmitted already is regarded invalid.

Moreover, when the state processor unit 122 receives the traffic from the monitor unit 121 after receiving the "dormancy declaration message" from the adjacent base station (after the adjacent base station enterers the dormant mode) and determines that the reactivation condition is satisfied, the state processor unit 122 requests the MSG transmission unit 123 to transmit the "dormancy declaration release message" to the adjacent base station.

Further, when the state processor unit 122 receives the "dormancy declaration release message" from the adjacent base station via the MSG reception unit 124 when the base station 100 is in the dormant mode, the state processor unit 122 requests the power supply unit 140 to allow the base station 100 to enter the operating state (normal operation mode) from the dormant mode.

Upon receiving requests to transmit the respective messages from the state processor unit 122, the MSG transmission unit 123 generates the respective messages and transmits the same to the adjacent base station. Examples of the types of the messages include "dormancy declaration message", "dormancy declaration abandon message", "dormancy declaration release message", "ACK message", "NAK message" and the like.

Upon receiving the respective messages from the adjacent base station, the MSG reception unit 124 notifies the state processor unit 122 of the receipt of the respective messages.

The adjacent base station information DB 125 stores information such as identification information of an adjacent base station adjacent to the base station 100 and an adjacent base station state (dormant mode or normal operation mode), for example. The state processor unit 122 can access the adjacent base station information DB 125 appropriately to acquire the identification information of a transmission destination when transmitting respective messages to the adjacent base station and to store the adjacent base station state.

The baseband unit 128 performs processing such as demodulation, error correction decoding, and the like on the baseband signal output from the reception unit 111 to extract data and the like. The baseband unit 128 outputs the extracted data and the like to the external I/F unit 130. Moreover, the baseband unit 128 performs processing such as error correction coding, modulation, and the like on the data and the like output from the external I/F unit 130 to obtain a baseband signal and outputs the baseband signal to the transmission unit 112. The baseband unit 128 may include an error correction coding circuit, an error correction decoding circuit, a modulation circuit, a demodulation circuit, and the like so that such processing can be performed.

The timing control unit 129 controls the timing at which the baseband signal is output from the baseband unit 128 to the transmission unit 112, the timing at which the radio signal is transmitted from the transmission unit 112 via the transmission antenna 102, and the like, for example. Moreover, the timing control unit 129 controls the timing at which the data and the like are output from the baseband unit 128 to the external I/F unit 130, and the like.

The external I/F unit 130 is connected to an upper apparatus of the base station 100 so as to convert the data and the like output from the control unit 120 into a predetermined format so that the data and the like can be transmitted to the upper apparatus. The external I/F unit 130 transmits the converted data to the upper apparatus. Moreover, the external I/F unit 130 receives data of a predetermined format transmitted from the upper apparatus, extracts data to be transmitted to the terminal 200 from the data, and outputs the extracted data to the control unit 120. The predetermined format used between the base station and the upper apparatus may be an S1 interface, for example.

The external I/F unit 130 converts the respective messages output from the MSG transmission unit 123 into such a format that the messages can be transmitted to the adjacent base station and transmits the messages to the adjacent base station. Moreover, the external I/F unit 130 receives data of a predetermined format transmitted from the adjacent base station and extracts the respective messages from the received data. The format used between the base station and the adjacent base station may be the X2 interface, for example.

The power supply unit 140 turns the power of the base station 100 on or off according to the control of the control unit 120. Moreover, the power supply unit 140 puts the base station 100 into the dormant mode or the normal operation mode according to the control of the state processor unit 122. Upon receiving the notification of the entering into the dormant mode from the state processor unit 122, the power supply unit 140 supplies power to the external I/F unit 130, the MSG reception unit 124, and the state processor unit 122 and does not supply power to the other processing blocks, for example. In this way, the base station 100 can receive data via the X2 interface when the base station 100 is in the dormant mode, for example. On the other hand, upon receiving the notification of the entering of the base station 100 in the dormant mode into the normal operation mode (the operating state) from the state processor unit 122, the power supply unit 140 supplies power to all processing blocks of the base station 100, for example.

### <4. Example 1>

Next, an operation example of the mobile communication system 10 having such a configuration will be described. In the mobile communication system 10 of the second embodiment, a message such as the dormancy declaration message is exchanged between base stations, and the base station 100 itself controls whether the operation of the subject base station is to be dormant based on the message.

Due to this, for example, a system, an apparatus, or the like that controls the operation states of respective base stations in a centralized manner does not need to be installed, and an autonomous distributed control method in which base stations are interlinked can be performed. Moreover, it is possible to prevent an increase in installation cost resulting from introduction of a new system.

In this case, the mobile communication system 10 utilizes the existing communication protocol (for example, FIGS. 14A to 14C) and minimizes the effect on the existing product specification as much as possible. In this respect, an increase in the cost can be prevented.

As described above, in the mobile communication system 10, the operation of the base station 100 is dormant while the base stations cooperate with each other by exchanging the dormancy declaration message, for example, to thereby reduce power consumption of the entire system. In this case, the adjacent base station does not perform control so as to increase the transmission power in order to cover the dormant service area and the occurrence of interference between adjacent base stations is prevented.

In particular, in the mobile communication system 10, it is possible to provide an energy-saving effect while autonomously optimizing base stations which operates in an area (for example, a tourist spot, a depopulated area, or near an event venue) where a change in mobility of users is large or an area (for example, a business street, a residential street, a harbor area, the roads in a mountain region, a market, or near educational facilities) where a change in the amount of communication traffic in day and night hours is large.

Hereinafter, the operation example of the mobile communication system 10 will be described while describing two examples in detail.

Example 1 is an application example in which the present invention is applied to an indoor wireless system provided inside a space (hereinafter sometimes referred to as a closed space), for example. For example, by suspending a femto base station installed inside a space depending whether the space is a meeting room in an office where many people gather temporarily or an area where no person is present in overtime hours or holidays, it is possible to provide a power-saving effect of communication facilities.

A femto base station is a base station which provides services to a registered terminal 200 but does not provide services to a non-registered terminal 200, for example.

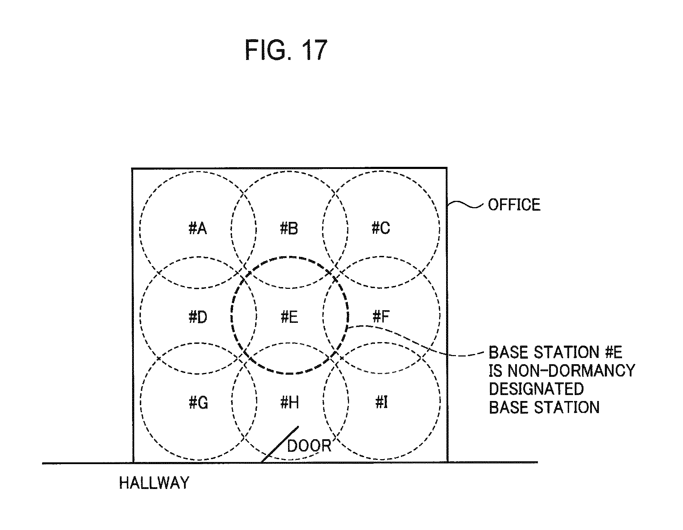

FIG. 17 illustrates an example of an installation form of base stations (for example, femto base stations) 100 in a close space. For example, as illustrated in FIG. 17, a largest number of people are present in a cell range of a base station #E installed in the center of an office, and it is therefore expected that many people perform communication via the terminals 200.

In this mobile communication system 10, the base station #E installed in the center of a close space is not allowed to be dormant and the other base stations #A to #D and #F to #I are allowed to be dormant.

By doing so, for example, the mobile communication system 10 can provide an energy-saving effect in the close space and to maintain services appropriately. Naturally, besides the base station #E, the base station #A may be set as a non-dormancy designated base station and the base station #B may be set as a non-dormancy designated base station depending on a movement state or the like of people in an office.

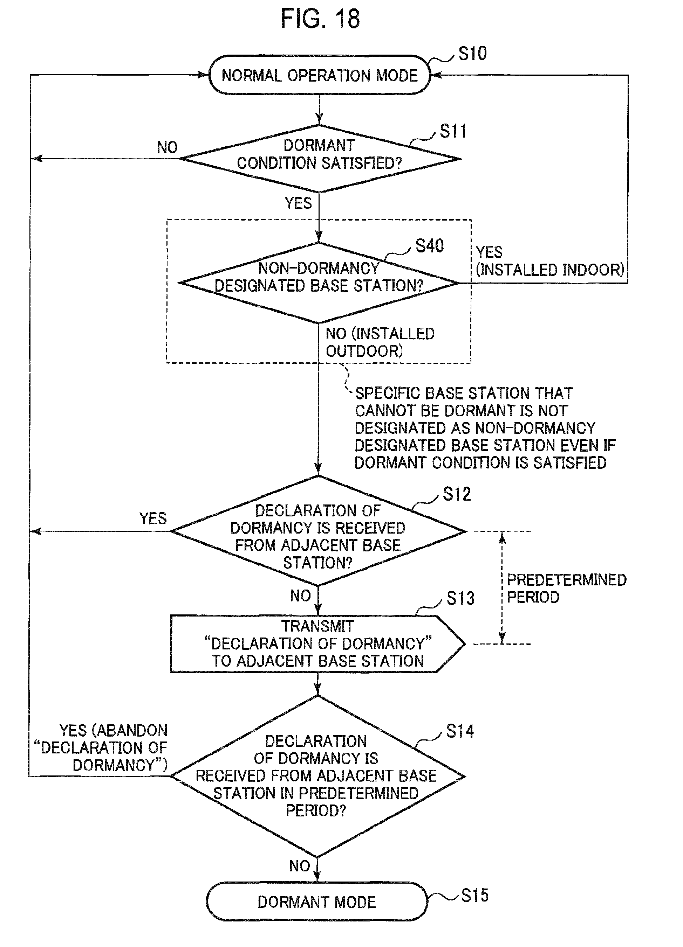

FIG. 18 illustrates an example of an operation flow according to Example 1. Although FIG. 18 illustrates the example of the "guard timing scheme," the same can be applied to the "ACK/NAK scheme".

When the base station #E in the normal operation mode (S10) satisfies the dormant condition (S11: YES), the base station #E determines whether the subject base station is a non-dormancy designated base station (S40). When the subject base station is designated as the non-dormancy designated base station, the base station 100 is not dormant without entering the dormant mode even if the dormant condition is satisfied. For example, non-dormant designated base station identification information is stored in a memory of the adjacent base station information DB 125 or the like. When it is determined that the dormant condition is satisfied (S11: YES), the state processor unit 122 can determine whether the subject base station is a non-dormancy designated base station by accessing the adjacent base station information DB 125 to determine whether the identification information of the subject base station is identical to the identification information of the base station designated as the non-dormancy designated base station.

When the subject base station is designated as the non-dormancy designated base station (S40: YES), the base station #E continues the normal operation mode (S10). On the other hand, when the subject base station is not designated as the non-dormancy designated base station (S40: NO), the base station #E performs the processes of S12 and subsequent steps.

For example, when the base station #E is designated as the non-dormancy designated base station, the base station #E continues the normal operation mode (S10). On the other hand, the base stations #A to #D and #F to #I which are not designated as the non-dormancy designated base station determine "NO" in S40 and are allowed to enter the dormant mode (S32).

For example, depending on the movement of people or a change in indoor traffic when workers go to an office at the start of working hours from a state of night hours when no people is present, a base station (for example, the base station #E) serving as a key for operating the dormant base stations (for example, the base stations #A to #D and #F to #I) may be designated as the non-dormancy designated base station.

The mobile communication system 10 of Example 1 can be applied to IEEE 802-series, wireless LAN, and other mobile communication systems as well as the 3GPP mobile communication system. The same is true for all examples of the second embodiment.

### <5. Example 2>

The mobile communication system 10 of the second embodiment can be also applied to HetNet, for example. HetNet is an example of the mobile communication system 10 in which a large cell and a small cell are layered, for example.

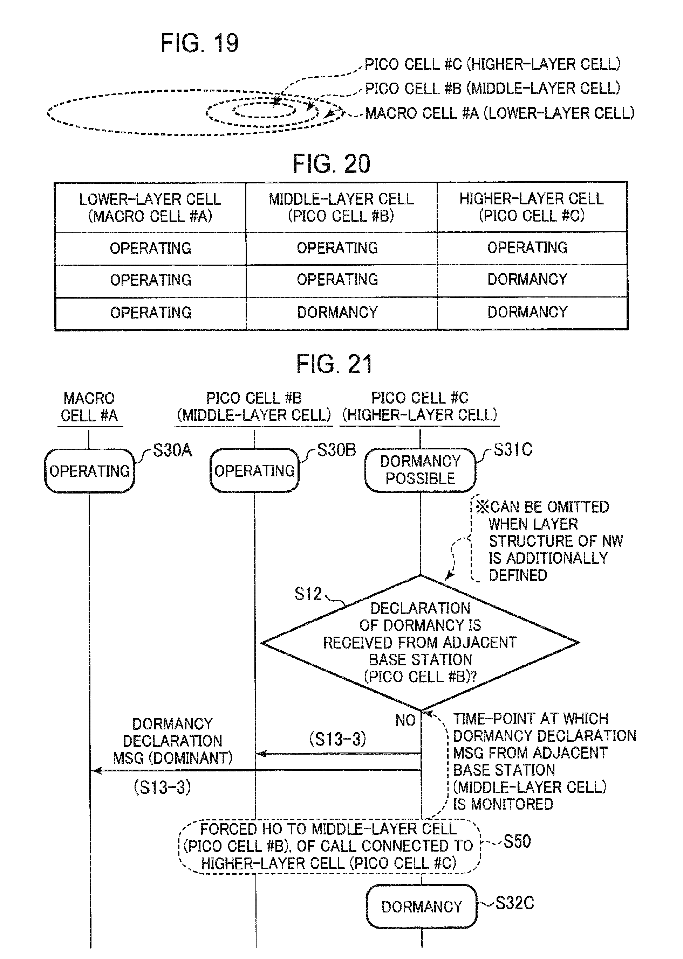

FIG. 19 illustrates a configuration example of HetNet. In the example of FIG. 19, a three-layer structure is employed such that a macro cell #A is a lower-layer cell, a pico cell #B is disposed in the macro cell #A as a middle-layer cell, and a pico cell #C is disposed in the pico cell #B as a higher-layer cell. For example, the macro cell #A is a large cell and the pico cells #B and #C are small cells.

FIG. 20 illustrates an example of a state matrix in a network having such a layer structure. For example, the pico cell #C on the higher layer may be put into the dormant mode, and the pico cells #B and #A on the lower layer than the pico cell #C may be put into the operating state (or the normal operation mode). Moreover, the pico cell #C on the higher layer and the pico cell #B on the middle layer may be put into the dormant mode and the macro cell #A on the lower layer may be put into the operating state.

However, in this example of HetNet, the occurrence of a situation in which only the pico cell #B on the middle-layer is in the dormant mode and the two cells #A and #C on the higher and lower layers are in the operating state is prevented. This is because, in FIG. 19, it is less likely that the traffic of the pico cell #B only becomes higher than that of the other layers and it is expected that it is difficult to stably maintain the connection of a call connected to the pico cell #B if the pico cell #B only is in the operating state.

In the following description, it is assumed that the three cells #A to #C take the operation states illustrated in FIG. 20.

FIG. 21 illustrates an example of an operation sequence according to Example 2. In this example, the dormancy declaration message transmitted from the middle-layer cell (the pico cell #B) is regarded recessive and the dormancy declaration message transmitted from the higher-layer cell (the pico cell #C) is regarded dominant. Such dominance is designated for the respective base stations 100 (or cells), and the dominance can be determined based on the identification information of the base stations 100 (or cells), added to the dormancy declaration message.

In the example of FIG. 21, the pico cell #C on the higher layer satisfies the dormant condition and transitions to the dormancy possible state (S31C). Since the pico cell #C does not receive the dormancy declaration message from the adjacent base station (when counted from the pico cell #C on the higher layer, the adjacent base station is the pico cell #B) (S12), the pico cell #C transmits the dormancy declaration message (S13-3). In this case, since the dormancy declaration message is a dominant dormancy declaration message because it was transmitted from the pico cell #C on the higher layer.

Moreover, since the pico cell #C does not receive the dormancy declaration message from the adjacent base station (the pico cell #B) in the guard timing period, the pico cell #C enters the dormant mode (S32C). In this case, in order to cover a call connected to the subject cell before the pico cell #C enters the dormant mode, the pico cell #C forcibly hands the call over to the pico cell #B (S50).

The dominance or recessiveness of the dormancy declaration message can be determined based on an indicator added to the dormancy declaration message such as a designated priority allocated to a specific base station (or a plurality of base stations (or cells)) determined for each area as well as the identification information of the base station 100. For example, the state processor unit 122 may request the MSG transmission unit 123 to add the identification information of the subject cell (or the subject base station) as well as to transmit the dormancy declaration message. In this way, the pico cell #C can transmit the dominant dormancy declaration message.

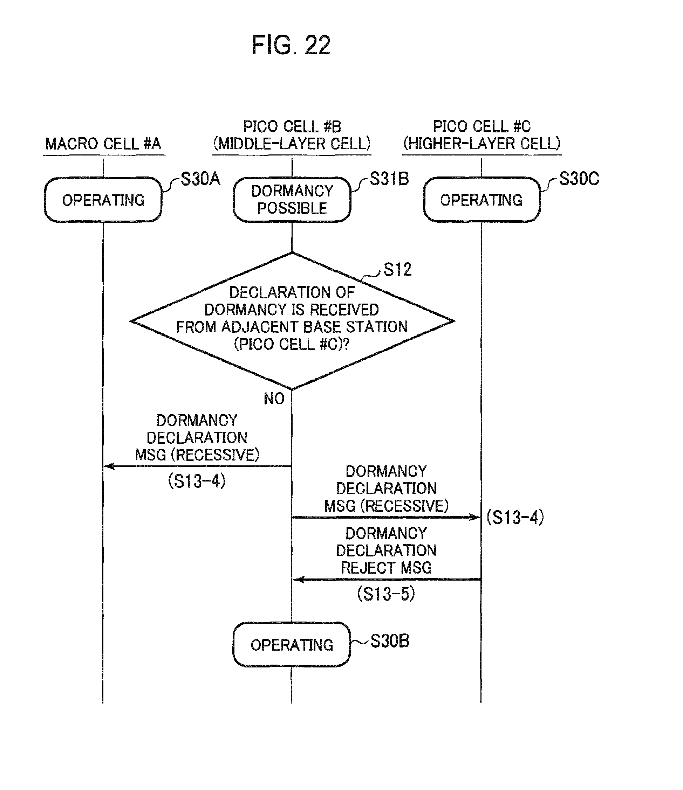

FIG. 22 illustrates an example of an operation sequence when a recessive dormancy declaration message is transmitted.

Since the pico cell #B on the middle layer transitions to the dormancy possible state (S31B) and does not receive the dormancy declaration message from the adjacent base station (in this example, the pico cell #C) (S12: NO), the pico cell #B transmits the dormancy declaration message to the macro cell #A and the pico cell #B (S13-4). In this case, the dormancy declaration message is regarded recessive because it is transmitted from the pico cell #B.

In this case, the pico cell #C which is a higher-layer cell than the pico cell #B transmits a dormancy declaration reject message to the pico cell #B in response to the recessive dormancy declaration message (S13-5). In this way, for example, the pico cell #C can prevent the pico cell #B on the middle layer from being dormant.

As described above, in the HetNet having a heterogeneous structure, the middle-layer cell (the pico cell #B) only may be put into the dormant mode. However, this structure results in a lack of a middle layer, which can become an instability factor in a network configuration and maintenance of calls. Thus, in this mobile communication system 10, the middle-layer cell is not dormant but continues the operating state.

From this reason, when the dormancy declaration message transmitted from a middle-layer cell is regarded recessive, and the dormancy declaration message transmitted from a higher-layer cell is regarded dominant, the higher-layer cell receives the recessive dormancy declaration message can prevent the middle-layer cell from being dormant by transmitting a reject message.

For example, upon receiving the dormancy declaration message, the state processor unit 122 checks the identification information of the source cell (or the source base station 100) of the message from the adjacent base station information DB 125. When it is checked that the message is the dormancy declaration message transmitted from a cell (or the base station 100) on the lower layer than the subject cell, the state processor unit 122 requests the MSG reception unit 124 to transmit the dormancy declaration reject message.

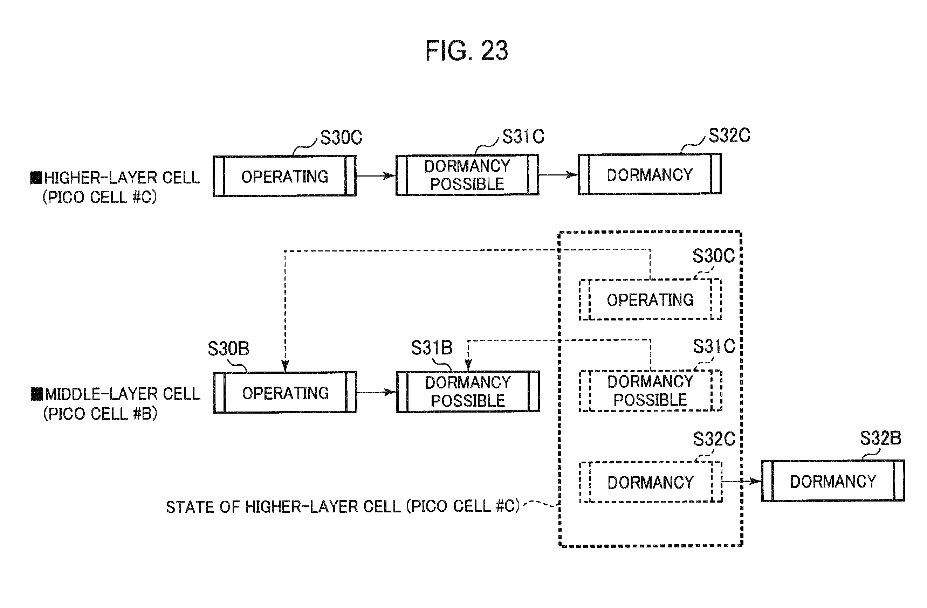

FIG. 23 illustrates an example of a state transition of a higher-layer cell (for example, the pico cell #C) and a middle-layer cell (for example, the pico cell #B).

The pico cell #C on the higher layer in the operating state (or the normal operation mode, S30C) transitions to the dormancy possible state (S31C) when the dormant condition is satisfied. Moreover, the pico cell #C in the dormancy possible state transitions to the dormant mode (S32C) when the dormancy declaration message does not be received from the adjacent base station in the guard timing period.

On the other hand, the pico cell #B on the middle layer in the operating state (S30B) transitions to the dormancy possible state (S31B) when the dormant condition is satisfied, for example.

Moreover, the pico cell #B on the middle layer does not transition from the dormancy possible state (S31B) directly to the dormant mode (S32B) but can transition to the dormant mode (S32B) when the pico cell #C on the higher layer enters the dormant mode (S32C). In this manner, the pico cell #B on the middle layer may sometimes transition to another mode according to the state of the pico cell #C on the higher layer.

Next, an example of an operation sequence according to Example 2 will be described.

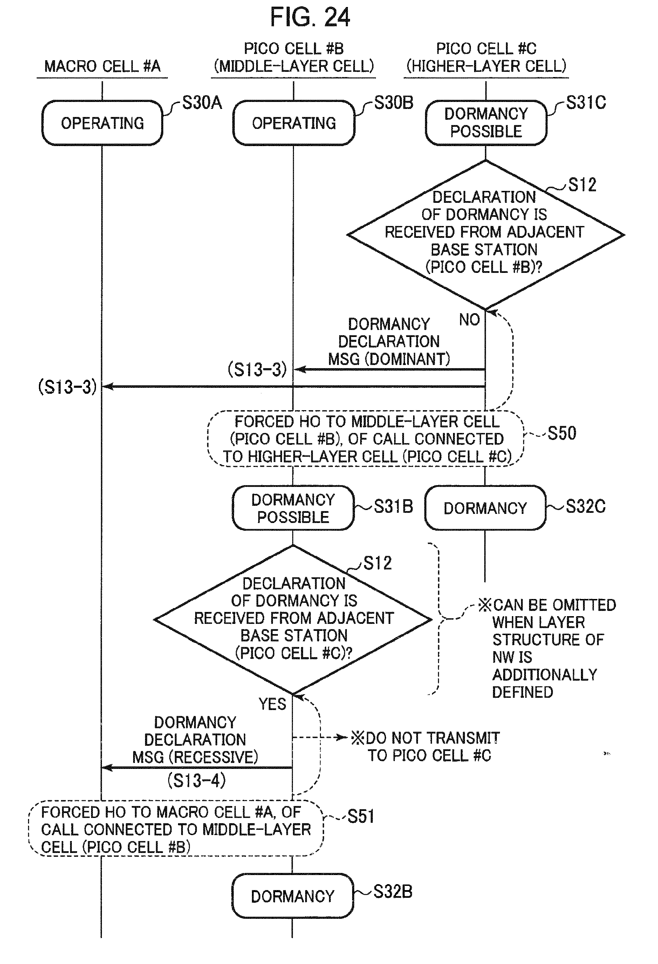

FIG. 24 illustrates an example of an operation sequence when the pico cell #C which is a higher-layer cell transitions to the dormancy possible state, and then, the pico cell #B which is a middle-layer cell transitions to the dormancy possible state.

The pico cell #C transitions to the dormancy possible state (S31C) when the dormant condition is satisfied. The pico cell #C transmits the dormancy declaration message (S13-3) when the dormancy declaration message does not be received from the pico cell #B which is the adjacent base station (S12: NO). In this case, the dormancy declaration message is regarded dominant because it is transmitted from the higher-layer cell.

When the dormancy declaration message does not be received from the adjacent base station in the guard timing period, for example, the pico cell #C forcibly hands a call connected to the pico cell #C over to the pico cell #B which is a middle-layer cell (S50). After that, the pico cell #C transitions to the dormant mode (S32C).

On the other hand, the pico cell #B which is a middle-layer cell transitions to the dormancy possible state (S31B) when the dormant condition is satisfied after handing over the call connected to the pico cell #C (S50).

When the dormancy declaration message is received from the adjacent base station (S12: YES), the pico cell #B transmits the dormancy declaration message to the macro cell #A which is an adjacent base station (S13-4). In this case, the dormancy declaration message is regarded recessive because it is transmitted from the middle-layer cell. At this time, the pico cell #B does not transmit the dormancy declaration message to the pico cell #C on the higher layer. For example, this is because the pico cell #C is a higher-layer cell of the pico cell #B and already enterers the dormant mode.

The pico cell #B which is a middle-layer cell transmits the dormancy declaration message (S13-4) upon receiving the dormancy declaration message transmitted from the pico cell #C which is a higher layer (S12: YES), for example.

Subsequently, the pico cell #B forcibly hands the call connected to the pico cell #B on the middle layer over to the macro cell #A (S51) and enters the dormant mode (S32B).

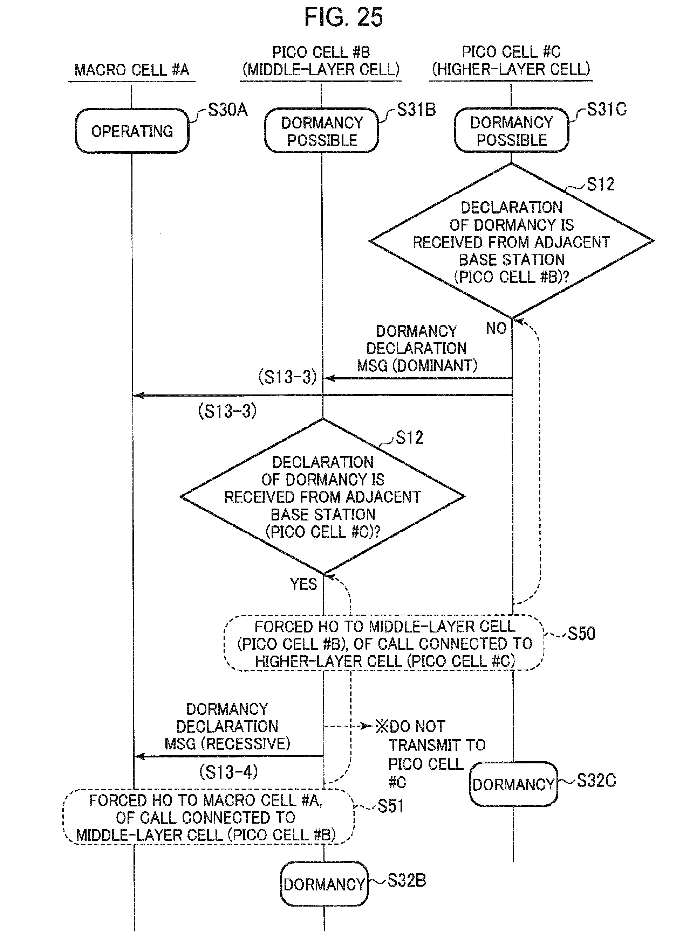

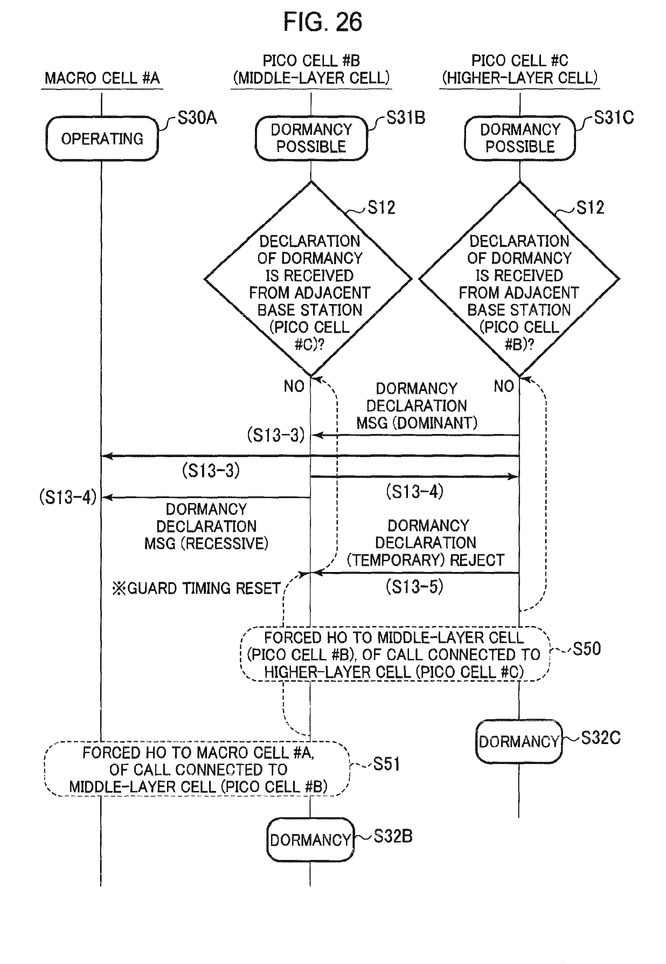

FIGS. 25 and 26 illustrate an example of an operation sequence when the pico cell #C which is a higher-layer cell and the pico cell #B which is a middle-layer cell transition to the dormancy possible state (S31B and S31C) substantially simultaneously.

In the example of FIG. 25, when it is determined that the dormancy declaration message does not be received from the adjacent base station (S12: NO) after the dormancy declaration message is transmitted (S13-3), the pico cell #C transmits the dormancy declaration message (dominant) (S13-3). When the dormancy declaration message does not be received in the guard timing period, for example, the pico cell #C forcibly hands the call connected to the pico cell #C over to another cell (S50) and enters the dormant mode (S32C).

On the other hand, the pico cell #B satisfies the dormant condition to transition to the dormancy possible state (S31B), and then, receives the dormancy declaration message (dominant) (S13-3). Upon receiving the dormancy declaration message (S12: YES), the pico cell #B transmits the dormancy declaration message to the macro cell #A (S13-4). In this example, the pico cell #B hands the cell connected to the pico cell #C over to the subject cell before transmitting the dormancy declaration message (S50). After that, the pico cell #B also enters the dormant mode (S32B).

In the example of FIG. 25, although the pico cells #B and #C transition to the dormancy possible state substantially simultaneously, the time-points at which whether the dormancy declaration message is received (S12) is determined are different.

On the other hand, in the example of FIG. 26, the determination on whether the dormancy declaration message is received (S12) is made substantially simultaneously.

That is, when the dormancy declaration message does not be received from the pico cell #B which is the adjacent base station (S12: NO), the pico cell #C which is a higher-layer cell transmits the dormancy declaration message (dominant) to the pico cell #B on the middle layer and the macro cell #A on the lower layer (S13-3).

Subsequently, the pico cell #B receives the dormancy declaration message (dominant) from the pico cell #C which is an adjacent base station (S12: YES) and transmits the dormancy declaration message (recessive) to the pico cell #C (S13-4).

In this case, although the pico cell #C receives the dormancy declaration message (recessive) from the pico cell #B, the pico cell #C transmits the dormancy declaration reject message to the recessive dormancy declaration message (S13-5).

Upon receiving the dormancy declaration reject message from the pico cell #C, the pico cell #B resets the guard timing period. For example, the pico cell #B can gain time to perform a handover (S50 and S51). The pico cell #C and the pico cell #B forcibly hand the call connected to the subject cell over to another cell (S50 and S51) and enter the dormant mode (S32C and S32B).

In the examples of FIGS. 25 and 26, even when two pico cells #B and #C transition to the dormancy possible state (S31B and S31C) substantially simultaneously, the pico cells transition to the dormant mode while servicing the connected call via a handover (S50 and S51). In this case, by exchanging the dormancy declaration message rather than performing centralized control or the like, cells (or base stations) can transition to the dormant mode autonomously in cooperation with each other.

Thus, since the respective pico cells can transition to the dormant mode even when the mobile communication system 10 is applied to the HetNet, it is possible to reduce the overall power consumption of the system. In this case, since the call connected to the dormant cell is serviced by a handover, it is possible to provide a service to the terminal 200 continuously.

Moreover, for example, even when the higher-layer cell (for example, the pico cell #C) receives the dormancy declaration message from the cell (for example, the pico cell #B on the middle layer or the macro cell #A on the lower layer) on the lower layer than the higher-layer cell, the higher-layer cell can enter the dormant mode if the subject cell satisfies the dormant condition regardless of whether the dormancy declaration message is received or not.

On the other hand, for example, the middle-layer cell or the lower-layer cell is not allowed to enter the dormant mode even when the subject cell satisfies the dormant condition but can enter the dormant mode upon receiving the dormancy declaration message from the cell (the higher-layer cell when counted from the middle-layer cell or the middle-layer cell and the higher-layer cell when counted from the lower-layer cell) on the higher layer than the subject cell. By doing so, it is possible to eliminate the instability factor in maintenance of calls due to the lack of a "middle layer" in the HetNet having a layered structure, for example.

### [Other Embodiments]

Next, the other embodiments will be described.

In the second embodiment, an example of HetNet is described with reference to FIG. 19. In addition to the configuration illustrated in FIG. 19, the HetNet may have a two-layer structure including a macro cell and a pico cell (or a large cell and a small cell) and a structure having four or more layers in which a plurality of pico cells is present. Moreover, a plurality of structures each having a plurality of pico cells may be present in one macro cell.

The mobile communication system 10 described in the second embodiment can be applied to any of the HetNets. In this case, for example, as described with reference to FIG. 22, the dormancy declaration message transmitted from the middle-layer cell is regarded recessive and the dormancy declaration message transmitted from the higher-layer cell is regarded dominant. When the higher-layer cell receives the recessive dormancy declaration message, the higher-layer cell transmits the dormancy declaration reject message to the middle-layer cell as a reply. When the middle-layer cell transitions to the dormancy possible state, the middle-layer cell can enter the dormant mode after receiving the dominant dormancy declaration message from the higher-layer cell. In this way, the mobile communication system 10 can be applied to a HetNet having a configuration other than the configuration illustrated in FIG. 19.

Moreover, in the second embodiment, although a non-dormancy designated base station is described in Example 1, such the base station may be applied to the HetNet described in Example 2.

### REFERENCE SIGNS LIST

10: Mobile communication system
100: Radio base station apparatus (Base station)
120: Control unit
121: Monitor unit
122: State processor unit
123: MSG transmission unit
124: MSG reception unit
130: External I/F unit
140: Power supply unit
150: First control unit
200: Terminal apparatus (Terminal)

## Claims

1. A mobile communication system comprising:
a first and second radio base stations apparatuses; and
a terminal apparatus, wherein
radio communication is performed between the first and second base station apparatuses and the terminal apparatus, and
the first radio base station apparatus includes:
a first control unit configured to control whether or not operation of the first radio base station apparatus is caused to be dormant based on a message exchanged between the second radio base station apparatus adjacent to the first radio base station apparatus and the first radio base station apparatus.

2. The mobile communication system according to claim 1, wherein the message is a message indicating operation condition in the first radio base station apparatus or the second radio base station apparatus.

3. The mobile communication system according to claim 1, wherein
the message includes a first dormancy declaration message indicating that the first radio base station apparatus is in a dormancy possible state, and
the first control unit is configured to transmit the first dormancy declaration message to the second radio base station apparatus adjacent to the first radio base station apparatus based on a communication state between the first radio base station apparatus and the terminal apparatus performing the radio communication with the first radio base station apparatus.

4. The mobile communication system according to claim 3, wherein
the message includes a second dormancy declaration message indicating that the second radio base station apparatus is in a dormancy possible state, and
the first control unit is configured to transmit the first dormancy declaration message, when the first control unit is configured to determine that the first radio base station apparatus is in the dormancy possible state based on the communication state and the first control unit is configured not to receive the second dormancy declaration message.

5. The mobile communication system according to claim 4, wherein the first control unit is configured to cause the operation of the first radio base station apparatus to be dormant, when the first control unit is configured not to receive the second dormancy declaration message from the second radio base station apparatus within a predetermined time from determining not to receive the second dormancy declaration message from the second radio base station apparatus.

6. The mobile communication system according to claim 4, wherein the message includes an acknowledge message permitting the dormancy of the first radio base station apparatus to the first dormancy declaration message, and
the first control unit is configured to transmit the first dormancy declaration message, and cause the operation of the first radio base station apparatus to be dormant when the first control unit is configured to receive the acknowledge message in response to the first dormancy declaration message from the second radio base station apparatus or a third radio base station apparatus adjacent to the first radio base station apparatus.

7. The mobile communication system according to claim 3, wherein
the second radio base station apparatus includes a second control unit,
the message includes a second dormancy declaration message indicating that the second radio base station apparatus is in a dormancy possible state, and
the second control unit is configured to transmit the second dormancy declaration message to the first radio base station apparatus based on a communication state between the terminal apparatus performing radio communication with the second radio base station apparatus and the second radio base station apparatus, and
the first and second control units is configured to cause the operation of the first and second radio base station apparatuses not to be dormant, when transmission of the first dormancy declaration message by the first control unit and transmission of the second dormancy declaration message by the second control unit is performed at the same time.

8. The mobile communication system according to claim 3, wherein
the first control unit is configured to transmit the first dormancy declaration message when a traffic amount transmitting and receiving between the first radio base station apparatus and the terminal apparatus is less than or equal to a threshold value.

9. The mobile communication system according to claim 1, wherein
the terminal apparatus includes a first terminal apparatus performing radio communication with the first radio base station apparatus and a second terminal apparatus performing radio communication with the second radio base station apparatus, and
the first control unit is configure to transmit to the second radio base station apparatus that the first radio base station apparatus is in the dormancy possible state of the operation when a traffic amount in the radio communication between the first radio base station apparatus and the first terminal apparatus is less than or equal to a threshold value, based on the message.

10. The mobile communication system according to claim 4, wherein the first control unit is configured to cause the operation of the first radio base station apparatus to continue, when the first control unit receives the second dormancy declaration message from the second radio base station apparatus within a predetermined period from transmitting the first dormancy declaration message.

11. The mobile communication system according to claim 10, wherein
the message includes a dormancy declaration abandon message, and
the first control unit is configured to transmit the dormancy declaration abandon message to the second radio base station apparatus transmitted the first dormancy declaration message, when the first control unit is configured to receive the second dormancy declaration message from the second radio base station apparatus within the predetermined period from transmitting the first dormancy declaration massage.

12. The mobile communication system according to claim 5, wherein
the message includes a negative acknowledge message not permitting the dormant of the first radio base station apparatus to the first dormancy declaration message, and
the first control unit is configured to transmit the first dormancy declaration message, and to cause the operation of the first radio base station apparatus to continue when the first control unit is configured to receive the negative acknowledge message in response to the first dormancy declaration message from the second radio base station apparatus or a third radio base station apparatus.

13. The mobile communication system according to claim 4 or claim 5, wherein,
the second radio base station apparatus includes a second control unit,
the message includes a start-up message starting the first radio base station apparatus being dormant,
the second control unit is configured to transmit the start-up message based on the communication state between the terminal apparatus performing the radio communication with the second radio base station apparatus and the second radio base station apparatus, and
the first radio control unit is configured to operate the first radio base station apparatus when the first control unit receives the start-up message.

14. The mobile communication system according to claim 1, wherein the first and second radio base station apparatuses allows a service provision to the terminal apparatus registered by the first and second radio base station apparatuses and does not allow the service provision to the terminal apparatus not registered by the first and second radio base station apparatuses.

15. The mobile communication system according to claim 3, wherein the first control unit is configured not to transmit the dormancy declaration message when the dormancy is allowed by first radio base station apparatus and to transmit the dormancy declaration message based on the communication state when the dormancy is allowed by the first radio base station apparatus.

16. The mobile communication system according to claim 1, wherein a cell range of the first radio base station apparatus includes a cell range of the second radio base station apparatus, and the first radio base station apparatus is a higher-layer base station apparatus to the second radio base station apparatus and the second radio base station apparatus is a lower-layer base station apparatus to the first radio base station apparatus.

17. The mobile communication system according to claim 16, wherein
the message includes a third and fourth dormancy declaration message indicating that the first and second radio base station apparatus is in the dormancy possible state respectively, and
the first control unit is configured to transmit the third dormancy declaration message to the second radio base station apparatus based on the communication state between the terminal apparatus performing with the first radio base station apparatus and the first radio base station apparatus, transmit to the second radio base station apparatus a dormancy declaration reject message indicating that the first control unit rejects the fourth dormancy declaration message in spite of receiving the fourth dormancy declaration message transmitted from the second radio base station apparatus, and cause the operation of the first radio base station apparatus to be dormant.

18. The mobile communication system according to claim 17, wherein
the second radio base station apparatus includes a second control unit, and
the second control unit is configured to cause the operation of the second radio base station apparatus to be dormant, when the second radio base station apparatus is in the dormancy possible state and the second control unis is configured to receive the third dormancy declaration message transmitted from the first radio base station apparatus.

19. The mobile communication system according to claim 1, wherein
the first control unit is configured to cause the operation without reception of a message transmitted from the second radio base station apparatus in a case of causing the operation of the first radio base station apparatus to be dormant.

20. A radio base station apparatus for performing radio communication with a terminal apparatus, the radio base station apparatus comprising:
a first control unit configured to control whether or not operation of the radio base station apparatus is caused to be dormant based on a message exchanged between another radio base station apparatus adjacent to the radio base station apparatus and the radio base station apparatus.

21. An operation control method in a mobile communication system performing radio communication between a first and second radio base station apparatuses and a terminal apparatus, the method comprising:
controlling whether or not operation of the first radio base station apparatus is caused to be dormant based on a message exchanged between the second radio base station apparatus adjacent to the first radio base station apparatus and the first radio base station apparatus, by the first radio base station apparatus.
